(19) Europäisches Patentamt
European Patent Office
Office européen des brevets

(11) EP 0 631 406 B1

(12) **FASCICULE DE BREVET EUROPEEN**

(45) Date de publication et mention
de la délivrance du brevet:
**20.12.2000 Bulletin 2000/51**

(51) Int. Cl.⁷: $H04L\ 5/06$, $H04L\ 27/02$

(21) Numéro de dépôt: **94460020.4**

(22) Date de dépôt: **21.06.1994**

(54) **Signal numérique apte à être reçu par des récepteurs à démodulateur de signaux modulés en amplitude à bande latérale réduite, procédé de transmission, procédé de réception, dispositif de réception et utilisation correspondants**

Digitales Signal geeignet zum Empfang durch Empfänger mit Demodulator für restseitenbandmodulierte Signale, sowie entsprechede Verfahren zum Senden, Verfahren zum Empfang, Empfänger und Verwendung

Digital signal adapted to be received by receivers with demodulators for VSB modulated signals, as well as corresponding method of reception, method of transmission, receiving device and use

(84) Etats contractants désignés:
**DE GB IT**

(30) Priorité: **21.06.1993 FR 9307727**

(43) Date de publication de la demande:
**28.12.1994 Bulletin 1994/52**

(73) Titulaires:
- **FRANCE TELECOM**
  **75015 Paris (FR)**
- **TELEDIFFUSION DE FRANCE**
  **75732 Paris Cédex 15 (FR)**

(72) Inventeurs:
- **Le Floch, Bernard**
  **F-35000 Rennes (FR)**
- **Sueur, Bertrand**
  **F-35000 Rennes (FR)**
- **Veillard, Jacques**
  **F-35760 Montgermont (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
EP-A- 0 441 731          WO-A-91/15925
DE-A- 1 766 564          DE-B- 1 293 191

- **EUROPEAN TRANSACTIONS ON TELECOMMUNICATIONS AND RELATED TECHNOLOGIES, vol.3, no.3, Mai 1992, MILANO IT pages 255 - 264, XP304924 N. J. FLIEGE: 'Orthogonal Multiple Carrier Data Transmission.'**
- **EBU REVIEW- TECHNICAL, no.224, Août 1987, BRUSSELS BE pages 168 - 190 M. ALARD / R. LASALLE: 'Principles of modulation and channel coding for digital broadcasting for mobile receivers.'**

**Description**

Le domaine de l'invention est celui de la transmission de signaux numériques. Plus précisément, l'invention concerne la transmission de signaux mettant en oeuvre simultanément une pluralité de fréquences porteuses codées chacune par des éléments de données numériques distincts.

De tels signaux numériques sont généralement désignés par le terme FDM (Frequency Division Multiplex (multiplex de fréquences)). Un exemple particulier de ces signaux, auquel s'applique notamment l'invention, est les signaux OFDM (Orthogonal Frequency Division Multiplex (multiplexage de fréquences orthogonales)).

Un signal OFDM est par exemple utilisé dans le système de diffusion numérique décrit notamment dans le brevet français FR-86 09622 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190), et connu sous le nom de système COFDM (Coded Orthogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est également candidat à la normalisation pour la diffusion terrestre de la télévision numérique.

La démodulation de ces signaux numériques à multiplex de fréquences nécessite l'utilisation de démodulateurs spécifiques, assurant une démodulation sur deux voies en quadrature. Un tel démodulateur est par exemple décrit dans le document de brevet FR-86 09622 précité.

On connait également, par le document DE-A-1766564, un système de transmission de données numériques, selon lequel les données sont réparties dans une pluralité de bandes de base, chacune d'entre elles etant ensuite transposée dans l'espace des fréquences, une bande de fréquence vierge étant ménagée entre la fréquence nulle et la première bande de fréquence.

Les démodulateurs analogiques classiques ne peuvent pas être utilisés pour recevoir ces signaux numériques, du fait notamment du bruit de phase qu'ils introduisent sur le signal démodulé. En effet, l'écart entre deux fréquences porteuses adjacentes du multiplex de fréquences est en général très faible, ce qui rend le décodage de chaque fréquence porteuse très sensible aux bruits de phase et aux décalages de fréquence.

C'est en particulier le cas des démodulateurs destinés à la réception de signaux modulés en amplitude à bande latérale réduite (MABLR). Outre que ceux-ci supposent une construction particulière du signal (limitation d'une bande latérale), ils génèrent en effet un bruit de phase incompatible avec le décodage d'un signal FDM ou OFDM, en particulier si une modulation à grand nombre d'états est mise en oeuvre pour chaque porteuse.

Pourtant, il serait souhaitable de pouvoir utiliser, au moins partiellement des moyens de démodulation déjà développés pour la réception analogique, notamment pour réduire les coûts d'introduction des techniques numériques (qu'il s'agisse des coûts de recherche, d'industrialisation ou de celui des récepteurs,...).

C'est par exemple le cas pour la diffusion de signaux de télévision numérique, en particulier sur les réseaux de câbles. En effet, la transmission des signaux analogiques (PAL, SECAM, D2-MAC, ...) dans les réseaux de câbles repose aujourd'hui sur une modulation d'amplitude à bande latérale réduite. L'introduction de la télévision numérique est envisagée dans le futur en utilisant les mêmes largeurs de bande de canaux que pour l'analogique.

Ainsi, le passage de l'analogique au numérique pourra se faire de façon progressive. Cependant, lors de la transition, les récepteurs devront comprendre deux tuners et deux démodulateurs distincts, pour la réception des signaux analogiques et numériques respectivement.

L'invention a notamment pour objectif de pallier ces inconvénients de l'état de la technique.

Plus précisément, un objectif de l'invention est de fournir un signal numérique à multiplex de fréquences apte à être reçu par un récepteur à démodulateur classique prévu pour la réception de signaux analogiques modulés en amplitude à bande latérale réduite.

En d'autres termes, l'invention a notamment pour objectif de fournir un tel signal numérique, qui puisse être reçu et démodulé dans des récepteurs à démodulateur MABLR.

Ainsi, un objectif de l'invention est de fournir un tel signal qui puisse être reçu dans un récepteur initialement prévu pour la réception de signaux analogiques, sans modification importante des tuners et modulateurs. Un objectif particulier de l'invention est notamment de permettre la réception d'un signal numérique de télévision à l'aide d'un démodulateur prévu pour la réception d'un signal D2-MAC Paquets.

Un autre objectif de l'invention est également de fournir un tel signal numérique, qui puisse être reçu alternativement avec d'autres signaux analogiques, à l'aide d'un unique démodulateur, par exemple dans le cas de signaux de télévision diffusés sur un réseau câblé.

L'invention a également pour objectif de fournir un tel signal, qui conserve l'intégrité du multiplex de fréquences. En d'autres termes, un objectif de l'invention est de fournir un tel signal duquel il est aisé de récupérer le multiplex de fréquences d'origine par exemple en vue de sa réémission vers un démodulateur numérique à deux voies en quadrature.

L'invention a encore pour objectif de fournir un tel signal, qui soit simple à construire, à partir du multiplex de fréquences. Ainsi, un objectif particulier de l'invention est de fournir un tel signal qui puisse être aisément réalisé par la tête de réseau d'un réseau de câbles, à partir d'un multiplex de fréquences diffusé par un satellite.

Un autre objectif de l'invention est encore de fournir des procédés de transmission et de réception d'un tel signal, ainsi que des dispositifs de réception correspondants.

Ces objectifs, ainsi que d'autres qui apparaîtront par la suite, sont atteints selon l'invention grâce à un signal de données numériques apte à être reçu par au moins un récepteur comprenant des moyens de démodulation de signaux modulés en amplitude à bande latérale réduite tel que défini dans les revendications indépendantes 1, 11, 15 et 21.

Ainsi, le signal de l'invention est constitué d'un signal FDM ou OFDM classique, auquel est adjoint une fréquence pilote, qui permet, ainsi que cela apparaîtra par la suite, d'assurer une démodulation du signal FDM ou OFDM à l'aide d'un démodulateur classique, malgré le bruit de phase.

La bande de fréquence vierge entre la fréquence pilote et le multiplex de fréquences permet notamment un fonctionnement correct des circuits de récupération de porteuse.

Dans un mode de réalisation avantageux de l'invention, ledit signal numérique source est organisé sous la forme d'une succession de symboles d'une durée prédéterminée $T_s$ comprenant chacun Q-P éléments de données distincts, chacun desdits symboles étant constitué d'une part d'un intervalle de garde de durée prédéterminée $\Delta$ et d'autre part d'une partie utile de durée prédéterminée NT durant laquelle chacun desdits Q-P éléments de données d'un symbole module une desdites fréquences porteuses.

Par élément de données on entend l'ensemble d'éléments binaires associés à chaque état de modulation.

Dans ce cas, il est avantageux que ladite pluralité de fréquences porteuses soit constituée de fréquences orthogonales, $\Delta f$ étant égal à 1/NT.

Il peut en particulier s'agir de symboles COFDM, de type connu.

La fréquence pilote $f_p$ peut ne pas être modulée. Toutefois, dans un mode de réalisation préférentiel de l'invention, ladite fréquence pilote $f_p$ est modulée en amplitude à faible indice par un signal de référence.

Il peut notamment porter un signal représentatif de la fréquence d'émission desdits symboles.

En effet, les démodulateurs classiques MABLR ne peuvent pas extraire ces informations du signal OFDM.

Par exemple, il peut s'agir d'un signal périodique de période $2.T_s=2(NT + \Delta)$. Cette fréquence est en effet nécessaire pour reconstruire le signal numérique source, dans un mode de réalisation particulier d'un procédé de réception, décrit par la suite.

Lorsque lesdits symboles sont regroupés en trames de symboles, chacune desdites trames comprenant au moins deux symboles, le signal de référence peut aussi porter un signal représentatif de la fréquence d'émission desdites trames.

Avantageusement, ledit signal de référence comprend au début de chacune desdites trames un motif prédéfini rompant la périodicité dudit signal de référence.

De façon préférentielle, ledit signal numérique source comprend au moins un signal appartenant au groupe comprenant:

- les signaux d'images ;
- les signaux de sons ;
- les signaux de données.

Dans un mode de réalisation particulier, correspondant notamment à la diffusion de signaux de télévision sur les réseaux de câbles, ladite bande de fréquence vierge occupe une largeur de bande de l'ordre de 100 kHz, et ladite pluralité de fréquences porteuses occupe une largeur de bande de l'ordre de 8 MHz.

Un tel signal peut notamment être construit selon un procédé comprenant les étapes suivantes :

- création d'éléments de données représentatifs d'un signal numérique source ;
- création de symboles, chaque symbole comprenant Q-P éléments de données, P étant un nombre entier strictement supérieur à 1 et Q étant un nombre entier strictement supérieur à P ;
- modulation d'une pluralité de fréquences porteuses $f_p+P.\Delta f$ à $f_p+Q.\Delta f$ par lesdits symboles, de façon à former un premier signal, chacune desdites fréquences porteuses étant modulée par un élément de données distinct de chaque symbole, $f_p$ étant une fréquence prédéterminée et $\Delta f$ étant l'écart de fréquence entre deux fréquences porteuses consécutives ;
- ajout audit premier signal d'une fréquence pilote $f_p$, de façon à former un signal à transmettre ;
- transmission dudit signal à transmettre.

Préférentiellement, ce procédé comprend de plus une étape de :

- modulation en amplitude à faible indice de ladite fréquence pilote $f_p$ par un signal de référence portant notamment des informations de synchronisation pour la réception dudit premier signal.

Le signal de l'invention peut également être réalisé directement par synthèse numérique, à l'émission, à partir de deux séries de valeurs I(nT) et Q(nT) délivrées par une opération de transformation mathématique, à la fréquence d'échantillonnage 1/T, à l'aide des étapes suivantes :

- multiplication des échantillons I(nT) par $(-1)^n$, de façon à obtenir des valeurs x(nT) ;
- synthèse de valeurs Q(nT+T/2) à partir desdits échantillons Q(nT) ;
- multiplication des valeurs Q(nT+T/2) par $(-1)^{n+1}$, de façon à obtenir des valeurs x(nT+T/2) ;
- application auxdites valeurs x(nT) d'un retard de compensation de durée égale à celle de ladite étape de synthèse ;
- multiplexage desdites valeurs x(nT) retardées et x(nT+T/2), de façon à obtenir des valeurs x(nT/2) ;
- conversion numérique/analogique desdites valeurs x(nT/2).

Avantageusement, une étape de correction de maintien comprenant un filtrage passe-bas à la fréquence de coupure 1/T et une préaccentuation des fréquences porteuses proches de 1/T est ajoutée. Cette préaccentuation peut préférentiellement se faire sous forme numérique dans la synthèse des signaux I(nT) et Q(nT).

Le procédé de réception et de décodage comprend, avantageusement, pour restituer le signal d'origine, les étapes suivantes :

- réception du signal de données numériques transmis ;
- récupération de la fréquence pilote $f_p$;
- démodulation selon les techniques de démodulation appliquées aux signaux modulés en amplitude à bande latérale réduite du signal reçu, par multiplication dudit signal reçu par ladite fréquence pilote $f_p$ récupérée ;
- filtrage passe-bas éliminant notamment les composantes fréquentielles de l'ordre de $2.f_p$ ;
- décodage du signal démodulé.

De façon préférentielle, ladite étape de récupération de la fréquence pilote $f_p$ comprend une des étapes appartenant au groupe comprenant les étapes de :

- filtrage à bande étroite centré sur la fréquence $f_p$ du signal reçu puis écrêtage au-dessus d'une amplitude maximum ;
- récupération de ladite fréquence pilote à l'aide d'une boucle à verrouillage de phase alimentée par le signal reçu.

Avantageusement, ladite étape de décodage du signal démodulé comprend les étapes suivantes :

- récupération de ladite pluralité de fréquences porteuses, par filtrage passe-haut dudit signal démodulé ;
- conversion analogique/numérique du signal formé de ladite pluralité de fréquences porteuses ;
- démodulation de chacune desdites fréquences porteuses, de façon à récupérer les éléments de données formant le signal numérique source.

Si ladite fréquence pilote $f_p$ est modulée en modulation d'amplitude par un signal de référence, le procédé comprend les étapes de :

- récupération dudit signal de référence à la fréquence $1/2T_S$, par filtrage passe-bas dudit signal démodulé ;
- génération, à partir dudit signal de référence, d'au moins un des signaux appartenant au groupe comprenant :

  - un signal d'horloge à la fréquence 1/T ;
  - un signal d'horloge à la fréquence 2/T ;
  - un signal indiquant le début de chacune des trames dudit signal démodulé.

Pour récupérer le signal source d'origine, ladite étape de conversion analogique/numérique délivrant, à la fréquence d'échantillonnage 2/T, des échantillons x(n.T/2) il est avantageux que ladite étape de démodulation de chacune desdites fréquences porteuses comprenne les étapes de :

- répartition alternative desdits échantillons sur une première et une seconde voies, ladite première voie recevant les échantillons x(nT) et ladite seconde voie recevant les échantillons x(nT+T/2) ;
- multiplication des échantillons x(nT) de ladite première voie par $(-1)^n$, de façon à obtenir des valeurs I(nT) ;

**4**

- multiplication des échantillons x(nT+T/2) de ladite seconde voie par $(-1)^{n+1}$, de façon à obtenir des valeurs Q(nT+T/2) ;
- synthèse de valeurs Q(nT), à partir desdites valeurs Q(nT+T/2) ;
- introduction sur ladite première voie d'un retard de compensation de durée égale à celle de ladite étape de synthèse ;
- transformation de Fourrier desdites valeurs I(nT) et Q(nT), délivrant lesdits éléments de données représentatifs dudit signal numérique source.

Préférentiellement, ladite étape de synthèse comprend les étapes de :

- filtrage d'interpolation d'ordre 2 desdites valeurs Q(nT+T/2) ;
- décimation d'ordre 2.

L'invention concerne également, bien sûr, les dispositifs de réception prévus pour recevoir le signal de l'invention, ainsi que toutes les utilisations de ce signal. Une utilisation particulière de l'invention est la diffusion de signaux numériques sur un réseau câblé.

D'autres caractéristiques et avantages de l'invention apparaîtront à la lecture de la description suivante d'un mode de réalisation préférentiel, donné à titre de simple exemple illustratif et non limitatif, et des dessins annexés dans lesquels :

- la figure 1 illustre une chaîne de codage et de décodage d'un signal COFDM, de type connu;
- la figure 2 présente la structure dans l'espace temps/fréquence du signal COFDM transmis dans la chaîne de la figure 1 ;
- la figure 3 est un exemple d'application du signal de l'invention pour la diffusion de signaux de télévision numériques ;
- la figure 4 représente, dans l'espace fréquentiel, la structure du signal de l'invention ;
- la figure 5 est un exemple de signal de synchronisation pouvant moduler en amplitude la fréquence pilote du signal de la figure 4 ;
- les figures 6 et 7 présentent deux modes de réalisation de démodulateurs, connus en soi, pouvant être mis en oeuvre pour la réception du signal de la figure 4 et correspondant respectivement à un démodulateur quasi-synchrone et à un démodulateur synchrone ;
- la figure 8 illustre la bande passante du filtre à fréquence intermédiaire des figures 6 et 7 ;
- la figure 9 présente le traitement supplémentaire appliqué aux échantillons délivrés par la $FFT^{-1}$ de la figure 1, pour obtenir le signal de l'invention ;
- la figure 10 présente le filtrage réalisé par le module de synthèse de la figure 9 ;
- la figure 11 est la réponse impulsionnelle du filtre de la figure 10 ;
- la figure 12 illustre un autre procédé de construction d'un signal tel qu'illustré sur la figure 4 ;
- la figure 13 est un schéma synoptique des moyens de traitement du signal démodulé délivré par les démodulateurs de figures 6 et 7, de façon à récupérer le signal source construit selon le procédé de la figure 12.

Avant de présenter en détail en mode de réalisation préférentiel de l'invention, on rappelle tout d'abord ci-dessous les caractéristiques principales d'un signal COFDM, auquel s'applique avantageusement l'invention. Il est à noter, cependant, que l'invention ne se limite en aucun cas à ce signal particulier, présenté seulement à titre d'exemple, mais peut au contraire s'appliquer à la transmission de tous les signaux numériques à multiplex de fréquences.

En effet, l'objectif principal de l'invention est de permettre la réception de tout signal comprenant des fréquences porteuses modulées indépendamment et relativement proches les unes des autres avec des moyens de démodulation analogiques classiques prévus pour la réception de signaux modulés en MABLR.

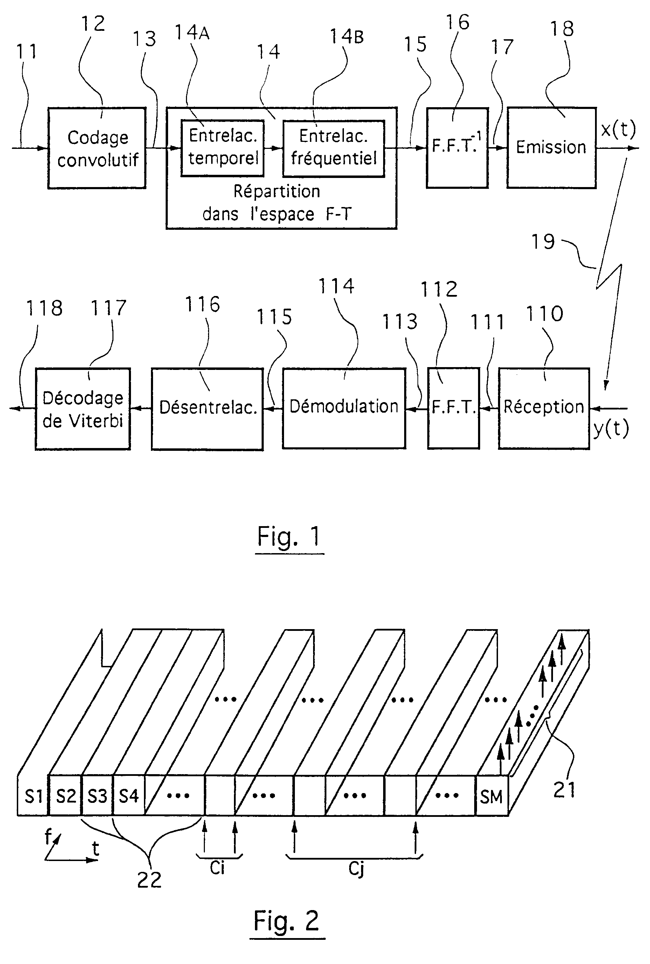

La figure 1 est donc un schéma synoptique d'une chaîne de codage et de décodage de type connu d'un signal COFDM. Les caractéristiques de ce système de diffusion sont notamment décrites dans l'article "Principes de modulation et de codage canal en radiodiffusion numérique vers les mobiles" déjà cité.

La construction d'un signal COFDM est en particulier basé sur l'utilisation conjointe d'un dispositif de codage de canal et d'un procédé de modulation par multiplexage de fréquences orthogonales.

Le codage canal met en oeuvre un code convolutif.

Le procédé de modulation proprement dit permet de s'affranchir des problèmes liés à la sélectivité en fréquence du canal. Il consiste à assurer la répartition d'éléments numériques constitutifs du signal de données dans l'espace fréquence-temps (technique de l'entrelacement en temps et en fréquence) et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

Bien que l'aspect du codage canal ne se rapporte pas directement au signal de la présente invention, on en décrit brièvement le principe, afin de présenter de façon complète la construction d'un exemple de signal selon l'invention.

Ainsi, les données numériques source 11 à transmettre sont soumises à un codage convolutif 12. Le principe général d'un tel code est d'associer à chaque valeur source une valeur codée dépendant de cette valeur source et d'au moins une des valeurs qui la précède. Du fait du lien ainsi créé entre les valeurs codées, il est alors possible, au décodage, de reconstruire la séquence des valeurs source même lorsqu'une valeur codée reçue est fausse, à l'aide d'un décodage à maximum de vraisemblance, tel qu'un décodage de Viterbi à décision douce (c'est-à-dire un décodage délivrant une estimation de la valeur reçue et une pondération représentative de la confiance que l'on peut accorder à cette estimation).

Avantageusement, un code externe du type Reed-Solomon ou CSRS (Cyclotomatically Shortened Reed Solomon (code de Reed Solomon cyclotomatiquement raccourci)) peut être concaténé au code convolutif.

Les données source peuvent bien sûr être de tout type, qu'il s'agisse de signaux sonores, de signaux d'images ou de signaux de données. Elles peuvent de plus correspondre à plusieurs sources d'origines distinctes, émises simultanément. Ainsi, par exemple, la demande de brevet FR 90 16383 déposée le 19.12.1990 au nom des mêmes déposants propose une organisation des données en trames et en canaux permettant d'assurer notamment la transmission simultanée de plusieurs canaux sonores (correspondant par exemple aux canaux stéréophoniques de plusieurs stations de radio), d'images fixes ou animées, d'informations de type télétexte, de signaux de radiomessagerie, etc...

Comme on l'a déjà précisé, le signal COFDM repose sur l'utilisation simultanée d'une pluralité de fréquences porteuses émises simultanément. Le nombre N de porteuses peut être quelconque. Il est classiquement de l'ordre de quelques centaines (il pourrait également être de l'ordre de quelques unités). Chacune de ces porteuses est modulée à un faible débit (par rapport au débit nécessaire pour un système monoporteuse correspondant). Cela permet de réduire l'effet de sélectivité du canal.

Le signal global émis est donc un signal large bande (occupant par exemple une bande de quelques Mégahertz).

Cette bande large est un avantage, dans le cas de signaux conçus pour tirer parti des trajets multiples, tel que le COFDM. En effet, du fait de l'étalement de la réponse du canal de transmission, il est très improbable qu'un évanouissement profond affecte simultanément l'ensemble du signal.

A titre d'exemple, dans une bande de fréquence de 8 Mhz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

Dans ce signal COFDM, et contrairement aux méthodes classiques de multiplexage en fréquence, les spectres des différentes porteuses se recouvrent mutuellement. Toutefois, le signal complet vérifie certaines conditions d'orthogonalité, permettant la séparation des informations associées aux différentes porteuses, par exemple en utilisant la technique de la transformation de Fourier (ainsi que cela est précisé plus loin). En d'autres termes, la notion d'orthogonalité des fréquences porteuses sous-entend que les spectres des porteuses peuvent se chevaucher, à la condition que, lorsqu'un des spectres présente sa puissance maximale, c'est-à-dire à la fréquence précise de la porteuse correspondant à ce spectre, tous les autres spectres ont une puissance nulle. Le décodage n'est donc pas perturbé si l'on considère cette fréquence précise.

L'interférence intersymbole introduite notamment par les trajets multiples lors de la transmission peut affaiblir cette orthogonalité. Pour éviter ce problème, on insère un intervalle de garde entre chaque symbole émis. La durée de cet intervalle de garde est choisie supérieure à l'étalement de la réponse impulsionnelle du canal.

Le codage 12 produit des éléments de données codées $C_k$ 13 appartenant à un alphabet de modulation. Le choix de l'alphabet spécifie le type de modulation utilisé. Par exemple, pour une modulation à 4 états de phase (MDP4), l'alphabet utilisé est {1 + i, 1 - i, -1 + i, -1 - i}. De nombreux autres types de modulation peuvent être utilisés, tels que les modulations MDP8, 16QAM ou les modulations par codage en treillis selon la méthode d'Ungerboeck.

Les éléments de données codés 13 sont ensuite soumis à une opération 14 de répartition dans l'espace fréquence-temps, qui consiste à associer à chacune des fréquences porteuses des éléments de données sélectionnés dans la suite des données codées 13 de façon à briser, par brassage, la corrélation des distorsions subies par les échantillons transmis. Par espace temps-fréquence, on entend un ensemble de points répartis selon deux axes perpendiculaires, l'axe du temps et l'axe des fréquences. Selon l'axe des fréquences, on distingue autant de points qu'il y a de fréquences porteuses. Selon l'axe du temps, un point correspond à la durée d'un symbole.

Par exemple, cette répartition assure au minimum que deux données source successives ne soient pas transmises consécutivement et/ou sur une même fréquence porteuse. Plus généralement, l'éloignement dans l'espace temps-fréquence entre deux données codées successives est au minimum tel que l'indépendance statistique entre ces données soit assurée.

Dans la pratique, cette répartition 14 dans l'espace temps-fréquence peut correspondre à un entrelacement en temps $14_A$ consistant par exemple en une application sélective de retards de différentes durées, suivi d'un entrelacement en fréquences $14_B$, consistant en une affectation sélective des éléments de données retardés aux différentes porteuses.

Chaque fréquence porteuse est ensuite modulée par la séquence d'éléments de données $C_k$ qui lui est destinée après l'entrelacement en temps et en fréquence 14. Cette opération de modulation peut être effectuée par l'application d'une transformation de Fourier rapide inverse ($FFT^{-1}$) 16 sur la suite 15 d'éléments de données entrelacés délivrée par le module 14.

Le module de transformation inverse 16 délivre des symboles élémentaires de modulation 17 correspondant à la modulation simultanée des N fréquences porteuses et destinés chacun à être transmis pendant l'intervalle de temps $T_s = t_s + \Delta$, où $t_s$ est la durée du symbole "utile" ($t_s = NT$), sur laquelle portera la démodulation et où $\Delta$ représente la durée de l'intervalle de garde (par exemple : $\Delta = T_s/4$).

Ces symboles 17 sont ensuite, dans les systèmes COFDM de type connu, émis à l'aide d'un module d'émission 18 classique, qui effectue notamment la conversion numérique/analogique des symboles 17, puis une transposition du signal analogique correspondant dans le domaine des radiofréquences.

Chaque symbole émis x(t) peut donc s'écrire :

$$x(t) = \sum_{k=0}^{N-1} Re\,(C_k \cdot e^{2i\pi f_k t})\ pour\ t\ \varepsilon\ [0,\ T_s]$$

où $f_k = f_0 + k/t_s$
et avec :

N : nombre de porteuses du multiplex de porteuses orthogonales ;
$f_0$ : fréquence arbitraire ;
$C_k$ : élément de l'alphabet de modulation.

Le signal émis dans un canal de transmission 19 (présentant généralement des trajets multiples) est reçu dans un module de réception 110, également classique.

Si l'intervalle de garde est plus long que la réponse impulsionnelle du canal, et si celui-ci varie lentement par rapport à la durée $T_s$ d'un symbole (invariance du canal pendant la durée d'un symbole), chaque symbole reçu (non affecté par l'interférence intersymbole) peut se mettre sous la forme :

$$y(t) = \sum_{k=0}^{N-1} Re\,(H_k \cdot C_k \cdot e^{2i\pi f_k t})$$

où $H_k$ représente la réponse du canal 19 à la fréquence $f_k$.

Dans le module de réception 110, le signal reçu est démodulé sur les voies en phase et en quadrature d'un oscillateur local de transposition à la fréquence $f_0 + 1/(2T)$ et échantillonné par un convertisseur analogique/numérique au rythme de 1/T, avec $T = t_s/N$.

Le signal 111 obtenu s'écrit :

$$x(nT) = (-1)^n \cdot \sum_{k=0}^{N-1} C_k \cdot H_k \cdot e^{2i\pi \frac{nk}{N}} \qquad (n = 0\ \grave{a}\ n-1)$$

Ce signal 111 est soumis à une transformation (FFT) 112, symétrique de la transformation inverse 16. Cette transformation 112 délivre les données 113 suivantes:

$$X_k = H_k \cdot C_k = \sum_{n=0}^{N-1} (-1)^n x(nT) \cdot e^{-2i\pi \frac{nk}{N}} \quad sur \ l'ensemble \ [(-1)^n x(nT)]_{n=0 \ \grave{a} \ N-1}$$

Ces données 113 sont ensuite corrigées (114) (suppression du terme $H_k$) par démodulation cohérente ou différentielle. Dans le cas d'une démodulation différentielle 114, et si l'on introduit un indice temporel j sur chaque porteuse, $C_{j,k}$ est le produit d'un codage différentiel des données :

$$C_{j,k} = C_{j-1,k} \cdot D_{j,k}$$

où $D_{j,k}$ sont les données brutes. La démodulation consiste à utiliser au rang j un estimateur simplifié du canal déduit du rang j-1 :

$$\tilde{H}_{j,k} = H_{j-1,k}$$

On obtient donc les éléments de données estimées :

$$X_{j-k} . X^*_{j-1,k} = (C_{j,k} . C^*_{j-1,k}) \cdot (H_{j,k} . H^*_{j-1,k}) = D_{j,k} . |H_{j,k}|^2$$

Ces éléments de données 115 sont ensuite soumis à un module de désentrelacement 116, effectuant les opérations inverses du module 14, de façon à reconstituer l'ordre d'origine des symboles, qui sont ensuite dirigés dans un module de décodage 117, effectuant un décodage à maximum de vraisemblance a posteriori, tel qu'un décodage de Viterbi à décision douce. Dans ce module de décodage 117, le facteur multiplicatif $|H^*_{j,k}|$ de l'équation précédente est directement représentatif de la confiance associée à la décision.

En effet, dans la pratique, il apparaît toujours du bruit lors de la transmission des signaux. Le signal reçu doit donc alors s'écrire :

$$X_{j,k} = H_{j,k} \cdot C_{j,k} + N_{j,k}$$

où $N_{j,k}$ est un bruit gaussien complexe dont chaque composante possède une variance $\sigma^2_{j,k}$.

Le décodage selon le critère de maximum de vraisemblance a posteriori consiste alors à minimiser l'expression :

$$\Sigma_j \ \Sigma_k \ \| X_{j,k} - H_{j,k} \cdot C_{j,k} \|^2 / (2.\sigma^2_{j,k})$$

Le module de décodage fournit ainsi, après un éventuel décodage du code concaténé, si un tel code a été mis en oeuvre à l'émission, le signal 118 correspondant au signal source 11.

Dans un signal COFDM, les symboles transmis sont avantageusement organisés en trames de symboles. La figure 2 présente, à titre d'exemple, une telle structure. Plus précisément, la figure 2 illustre une trame constituée de M symboles successifs.

Chaque trame débute avantageusement par deux symboles particuliers S1 et S2 dont le rôle est précisé par la suite. Elle comprend ensuite un certain nombre de symboles utiles S3 à SM, comprenant chacun N porteuses orthogonales modulées 21.

Le symbole S1 est un symbole nul, permettant d'une part d'effectuer une synchronisation analogique, et d'autre part d'effectuer l'analyse spectrale du canal de diffusion. Le symbole S2 est un second symbole de synchronisation constitué par un multiplex non modulé de toutes les fréquences porteuses, à enveloppe sensiblement constante. Il permet de recaler plus précisément la synchronisation par analyse de la réponse impulsionnelle du canal. Le rôle et le mode de réalisation de ces symboles S1 et S2 sont décrits dans le brevet FR 88 15216, déposé le 18.11.88, au nom des mêmes déposants.

Bien sûr, ces symboles de synchronisation ne sont pas obligatoires vis-à-vis de l'invention.

Le symbole S2 peut également être utilisé comme référence de phase pour la démodulation de chaque porteuse du symbole suivant, lorsque celles-ci sont modulées différentiellement.

Le cas échéant, la trame peut également être découpée en canaux (Ci, Cj) regroupant par exemple un nombre variable de symboles.

Enfin, chaque symbole débute par un intervalle de garde 22, pendant lequel aucun décodage n'est effectué. Il permet de supprimer les pertes d'orthogonalité dues aux interférences intersymboles.

Ainsi qu'on l'a déjà mentionné, l'invention a pour objectif de permettre la démodulation d'un signal numérique à multiplex de fréquences, tel qu'un signal OFDM ou COFDM, par un démodulateur prévu pour la démodulation d'un signal analogique modulé en MABLR, à la place du démodulateur 110 en phase et en quadrature décrit précédemment.

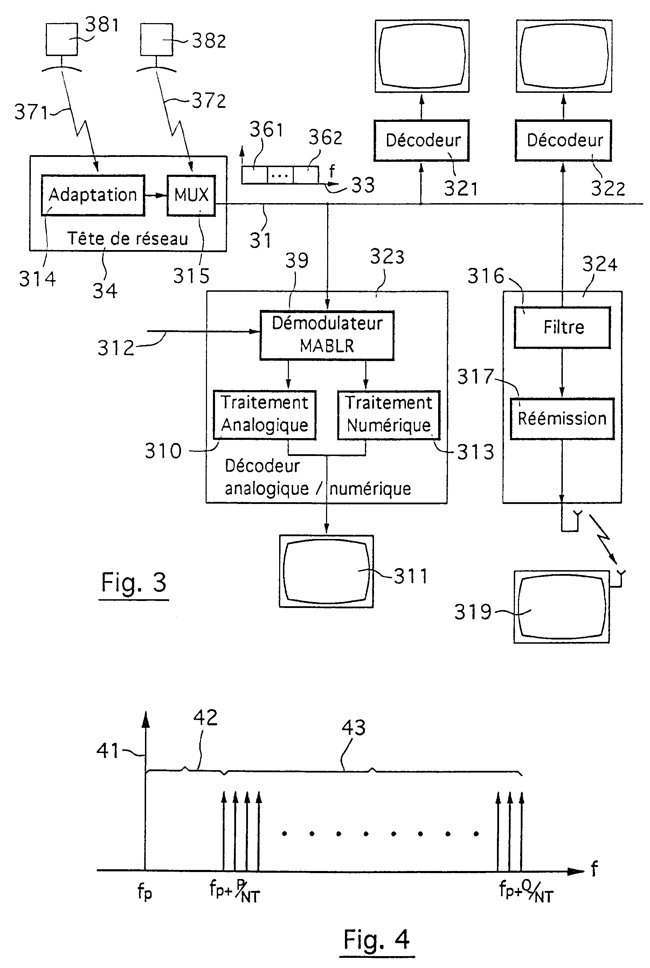

Un domaine privilégié d'application de l'invention est celui de la diffusion de signaux de télévision numérique, en particulier sur réseau de câbles. La figure 3 illustre un exemple d'une telle application.

Un réseau de câbles comprend classiquement au moins un câble 31 de distribution, qui peut être de tout type connu (coaxial, paire torsadée, fibre optique, etc...). La structure du réseau peut être quelconque : arborescente, en étoile ...

Une pluralité de décodeurs $32_1$ à $32_4$ sont connectés sur ce câble 31, et peuvent donc recevoir le signal composite 33 émis par le dispositif d'émission 34, encore appelé tête de réseau. Le signal composite 33 comprend en général plusieurs signaux $36_1$, $36_2$ multiplexés en fréquence. Chaque signal $36_1$, $36_2$ correspond par exemple à un programme de télévision. La tête de réseau 34 construit le signal composite 33 à partir de signaux d'origine $37_1$, $37_2$, transmis par exemple par satellite $38_1$, $38_2$.

Dans les systèmes connus de ce type, les signaux transmis dans chaque bande de fréquences $36_1$, $36_2$ sont des signaux analogiques, par exemple aux standards PAL, SECAM et/ou D2-MAC. Ces signaux sont modulés en modulation d'amplitude à bande latérale réduite. La largeur de chaque bande $36_1$,$36_2$ est généralement de 8 ou 12 MHz.

Le décodeur $32_3$ comprend un démodulateur 39, permettant la démodulation d'un des signaux $36_1$, $36_2$ sélectionné (312) par l'utilisateur, puis des moyens 310 de restitution de l'image au format analogique d'origine sur un écran 311. Il peut bien sûr comprendre de plus des moyens classiques de contrôle d'accès, de décryptage, de débit d'un compte...

Un des objectifs de l'invention est de permettre la diffusion simultanée sur le câble 31 de signaux de télévision analogiques et numériques, de façon à permettre une introduction progressive des techniques numériques. Ainsi, par exemple, le signal $36_1$ peut être un signal analogique D2-MAC, et le signal $36_2$ un signal numérique COFDM. La largeur de bande du signal numérique $36_2$ est égale à celle des signaux analogiques $36_1$.

Ainsi, un décodeur $32_1$, équipé uniquement de moyens de réception analogiques peut continuer à recevoir le signal D2-MAC $36_1$. Le décodeur $32_4$, uniquement numérique, peut décoder le signal COFDM $36_2$. Enfin, le décodeur $32_3$, qui est équipé de deux types de moyens de décodage analogique 310 et numérique 313 peut recevoir les deux types de signaux. Il s'agit donc d'un récepteur permettant une transition douce entre les techniques analogiques et numériques.

De façon à limiter les coûts d'adaptation d'un tel décodeur $32_3$, un objectif de l'invention est de réduire le plus possible les éléments à rajouter pour permettre la réception numérique. Plus précisément, l'invention permet la démodulation du signal $36_2$ à l'aide du démodulateur 39 prévu à l'origine pour la réception du signal $36_1$ modulé en MABLR (malgré le bruit de phase des tuners existants, qui ne permet pas, en l'absence de l'invention, la démodulation cohérente de signaux COFDM associés à des modulations d'amplitude et de phase à grand nombre d'états). Ainsi, il n'est pas nécessaire de disposer d'un démodulateur spécifique démodulant en phase et en quadrature : il est en particulier possible d'utiliser les tuners et démodulateurs développés pour la réception du système D2-MAC/Paquets.

Pour que cela soit possible, le signal numérique $36_2$ selon l'invention n'est pas un simple signal COFDM tel que généralement décrit. Au contraire, il est adapté dans la tête de réseau 34, par le module d'adaptation 314, de façon à être recevable par le démodulateur MABLR 39. Ce signal adapté est ensuite multiplexé (315) en fréquence avec d'autres signaux $37_2$ pour former le signal composite 33.

Il est à noter que cette adaptation 314 ne doit pas modifier le signal COFDM dans son intégrité, de façon qu'il puisse être reçu par le décodeur numérique $32_4$, qui peut par exemple comprendre un filtre 316 permettant d'extraire le signal COFDM (ainsi que cela sera précisé par la suite), puis, éventuellement, des moyens de réémission 317 permettant de transmettre (318) le signal à un récepteur autonome 319, selon la technique décrite dans la demande de brevet FR-92 13511 (non publiée).

La figure 4 présente donc le spectre du signal de l'invention, dans le domaine des fréquences. Il est constitué des signaux suivants :

- une fréquence pilote $f_p$ 41 ;
- une bande de fréquences 42 de largeur P/NT dans laquelle aucun signal n'est transmis, où P est un entier et NT est la durée utile d'un symbole de modulation COFDM ($NT=t_s$) ;
- l'ensemble 43 des porteuses COFDM, modulées par les signaux source $a_k$ et $b_k$ de la bande de fréquence occupée par les porteuses modulées s'étend de $f_p+P/NT$ à $f_p+Q/NT$, où Q est un entier.

Les valeurs P et Q respectent bien sûr les conditions suivantes :

$$1 < P < Q \leq N$$

La fréquence pilote $f_p$ peut être soit non modulée soit modulée en amplitude à faible indice par un signal de référence C(t) qui est décrit dans la suite.

Pour un symbole COFDM donné, et avec les notations utilisées précédemment, le signal COFDM peut donc s'écrire :

pour $-\Delta < t < NT$ :

$$s(t) = \sum_{k=P}^{Q} Re\left( c_k \cdot e^{2i\pi f_k t} \right)$$

soit :

$$s(t) = \sum_{k=P}^{Q} (a_k . \cos 2\pi f_k t - b_k . \sin 2\pi f_k t)$$

avec $f_k = f_p + k/NT$
ailleurs : $s(t) = 0$

Le signal transmis S(t) est donc :

$$S(t) = \sum_{p=-\infty}^{p=+\infty} s(t - pT_s) + C(t)\, \cos 2\pi f_p t$$

Les données $a_k$, $b_k$, et c étant alors dépendantes de l'indice p.

Dans cette dernière équation, clairement :

- le premier terme correspond au signal COFDM classique ;
- le second terme est dû à la fréquence pilote $f_p$. Bien sûr, si cette fréquence n'est pas modulée par un signal de référence, C(t) vaut 1 en permanence.

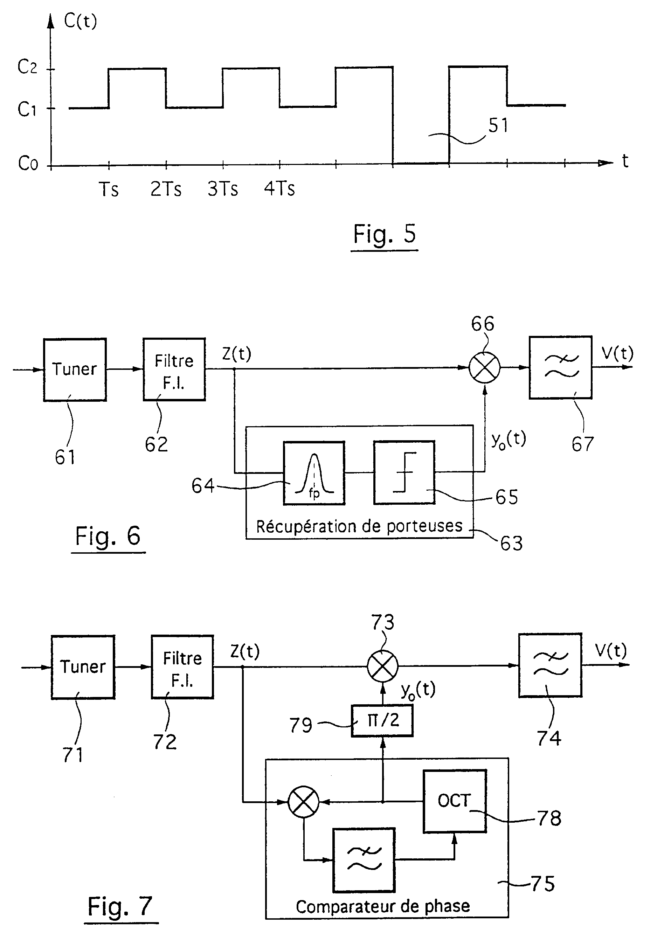

La fréquence pilote $f_p$ 41 permet d'assurer la démodulation cohérente ou quasi-synchrone du signal COFDM par un tuner et un démodulateur MABLR classiques, ainsi que cela est décrit par la suite en liaison avec les figures 6 et 7. En effet, l'ajout de la fréquence pilote 41 permet de définir, vu du récepteur, un signal à bande latérale réduite.

L'introduction d'une bande de fréquences 42 non utilisée autour de $f_p$ permet d'assurer le fonctionnement correct des circuits de récupération de porteuse $f_p$. Plus précisément, elle permet de récupérer l'instabilité de fréquence. Par exemple, la bande de fréquence 42 peut avoir une largeur de bande de l'ordre de 100 kHz, le peigne de porteuses 43 occupant alors environ 7,9 MHz, dans le cas de canaux de 8MHz. Dans ce cas, si N vaut 1024, P sera choisi entre 10 et 15, et Q entre 1009 et 1014.

Préférentiellement, la fréquence pilote $f_p$ est égale à la fréquence intermédinormalisée en télévision, à savoir 38,9 MHz.

Il est à noter que le signal COFDM 43 conserve son intégrité, et notamment les moyens nécessaires pour assurer la démodulation et la synchronisation par un récepteur adapté à la réception hertzienne. C'est en particulier le cas des fréquences porteuses de référence, décrites notamment dans la demande de brevet française FR-90 01491.

Ainsi, le récepteur $32_4$ de la figure 3 n'utilise pas la fréquence pilote $f_p$ 41. Il comprend donc un filtre 316 qui extrait le signal COFDM 43 seul.

En revanche, les démodulateurs MABLR ne peuvent pas utiliser les données de synchronisation inclues dans la signal COFDM 43. Il est donc avantageux que la fréquence pilote 41 soit modulée par un signal de référence C(t) transmettant des informations de synchronisation, et en particulier la fréquence symbole et/ou la fréquence trame.

Pour que la fréquence pilote 41 joue en permanence son rôle principal de contrôle de l'oscillateur du démodulateur, elle doit bien sûr être modulée en amplitude à faible indice, sans inversion de phase.

La figure 5 est un exemple de signal de référence C(t). Il s'agit d'un signal carré de période $2.T_s$ permettant au récepteur de retrouver très simplement la fréquence symbole $1/T_s$. Ce signal carré peut prendre deux valeurs distinctes constantes $C_1$ et $C_2$. Le signal C(t) peut donc être défini par les relations suivantes:

$$\text{pour } (p-1)T_s < t < pT_s: C_{p-1} = C_1$$
$$\text{pour } pT_s < t < (p+1)T_s: C_p = C_2$$

Le signal modulant est ainsi un signal carré de période $2T_s$ qui permet au récepteur de retrouver très simplement la fréquence symbole $1/T_s$.

La synchronisation de trame consiste à insérer au début de chaque trame de modulation un motif 51 qui rompt la périodicité du symbole C(t) et qui puisse être reconnu par un dispositif simple de récupération de la fréquence trame.

Un premier exemple de génération de ce motif de synchronisation de trame est illustré en figure 5 : on affecte au symbole de début de trame une amplitude particulière $C_0$ (par exemple $C_0=0$) qui peut être facilement reconnue par un dispositif à seuil.

Une autre méthode peut être d'insérer au début de chaque trame une suite de symboles $C_p$ identiques pendant plusieurs périodes $T_s$.

Le signal selon l'invention est construit par la tête du réseau 34, à partir du signal $37_1$. Le module d'adaptation 314 réalise notamment l'ajout de la fréquence pilote.

La figure 6 est un schéma synoptique d'un récepteur MABLR de type "quasi-synchrone", connu en soi, et par exemple utilisé pour la réception de signaux D2-MAC/paquets. Il est constitué des éléments suivants :

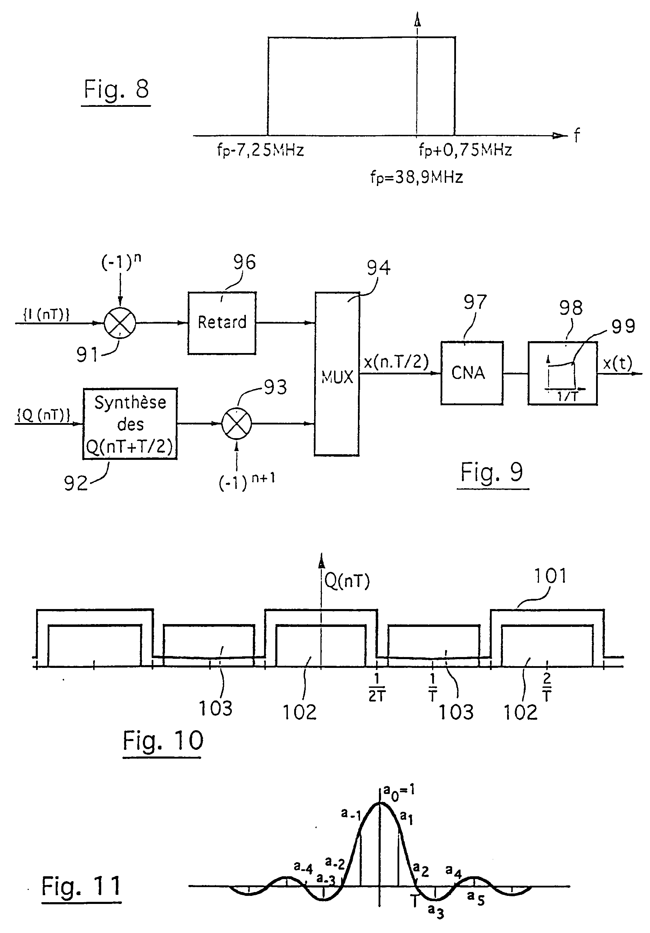

- un tuner 61 qui assure la transposition du signal de l'un des canaux du plan de fréquence à la fréquence intermédiaire $f_p$ (par exemple : $f_p$ = 38,9 MHz);
- un filtre 62 à fréquence intermédiaire qui assure la réjection des canaux adjacents et du bruit hors bande. Ce filtre est dissymétrique par rapport à la fréquence $f_p$. La figure 8 illustre la bande passante de ce filtre dans le cas d'un canal de largeur de bande 8 MHz. Cette bande passante est donc comprise entre $f_p$-7,25 MHz et $f_p$+0,75 MHz ;
- un circuit 63 de récupération de porteuse qui est constitué par un filtre 64 à bande étroite centré sur la fréquence $f_p$ suivi d'un circuit 65 limiteur d'amplitude (écréteur) qui a pour but de supprimer la modulation d'amplitude de la porteuse de fréquence $f_p$ ;
- un circuit 66 de démodulation qui consiste à faire le produit du signal démodulé Z(t) en sortie du filtre F.I. 62 par la porteuse récupérée $y_0(t)$ ;
- un filtre passe-bas 67 qui élimine les composantes fréquentielles autour de $2f_p$.

Dans le cas de la réception d'un signal COFDM tel que décrit précédemment, le signal reçu en fréquence intermédiaire à la sortie du filtre F.I 62 peut s'écrire sous la forme suivante (pendant la durée d'un symbole $T_s$):

$$Z(t) = \rho_0(\cos(2\pi f_p t + \varphi_0 + \Psi(t)) + \sum_{k=P}^{Q} \rho_k \{a_k \cos(2\pi(f_k)t + \varphi_k + \Psi(t)) - b_k \sin(2\pi(f_k)t + \varphi_k + \Psi(t))\}$$

$\rho_k$ et $\varphi_k$ représentent le module et la phase de la fonction de transfert du canal de transmission avec :

$$\rho_k = \rho(f_k)$$

$$\varphi_k = \varphi(f_k)$$

$\Psi(t)$ représente le bruit de phase des oscillateurs de transposition de fréquence intermédiaire en radiofréquence puis de radiofréquence en fréquence intermédiaire utilisés dans la transmission. C'est le bruit de phase qui est, dans l'invention, incompatible avec la démodulation d'un signal COFDM.

Le signal $y_0(t)$ obtenu en sortie du circuit de récupération de porteuse 63 (après filtrage de la bande étroite autour de $f_p$ et écrétage) peut s'écrire sous la forme:

$$y_0(t) = 2B \cos[2\pi f_p t + \varphi_0 + \Psi(t)]$$

Alors, le signal V(t) obtenu en sortie de démodulateur 66 après filtrage passe-bas 67 peut s'écrire :

$$V(t) = B\rho_0 C + B\sum_{k=P}^{Q} \rho_k \cdot \{a_k\cos(2\pi\frac{k}{NT}t + \varphi_k - \varphi_0) - (b_k\sin(2\pi\frac{k}{NT}t + \varphi_k - \varphi_0)\}$$

On constate donc que la contribution du bruit de phase $\Psi(t)$ des oscillateurs de transposition est éliminée par l'opération de démodulation 66.

Il est à noter que la largeur de bande du signal V(t) obtenu après démodulation s'étend de 0 à Q/NT.

La figure 7 illustre un autre mode de réalisation d'un récepteur, qui délivre un signal V(t) identique. Il s'agit d'un démodulateur MABLR de type synchrone, dans lequel les tuner 71, filtre en fréquence intermédiaire 72, multiplieur 73 et filtre passe-bas 74 sont identiques respectivement aux modules 61, 62, 66 et 67 de la figure 6, déjà décrits.

En revanche, la récupération de porteuse est réalisée à l'aide d'une boucle à verrouillage de phase 75 comprenant classiquement un comparateur de phase 76, un filtre de boucle 77 et un oscillateur commandé en tension 78. Le signal délivré par l'oscillateur 78 contrôle le multiplieur 73, après avoir été déphasé 79 de $\pi/2$.

Classiquement, un signal COFDM reçu et démodulé peut s'écrire :

$$y(t) = Re\{Y(t).e^{2i\pi f_c t}\}$$

où $f_c$ est la fréquence centrale du signal : $f_c = f_0 + N/2t_s$,

soit encore, Y(t) correspondant à la démodulation sur deux voies en quadrature de y(t):

$$y(t) = I(t)\cos 2\pi f_c.t - Q(t)\sin 2\pi f_c.t$$

On peut vérifier que le signal V(t) délivré par les démodulateurs des figures 6 et 7 est bien de la même forme. En effet, on a :

$$V(t) = \sum_{k=P}^{Q} \rho_k\{a_k\cos(2\pi\frac{k}{NT}t + \varphi_k - \varphi_0) - b_k\sin(2\pi\frac{k}{NT}t + \varphi_k - \varphi_0)\}$$

soit :

$$V(t) = \sum_{k=P}^{Q} Re(H_k c_k e^{2i\pi\frac{k}{NT}t})$$

où :

$$H_k = \rho_k e^{i(9\varphi k - \varphi 0)}$$
$$c_k = a_k + jb_k$$

On pose :

$$U(t) = H_k c_k e^{2i\pi k/NT\,t}$$

alors :

$$U(t) = \rho_k(a_k + jb_k)e^{i(2\pi k/NT + \varphi k - \varphi 0)}$$

$$= (\rho_k a_k + j\rho_k b_k)(\cos\Psi + j\sin\Psi)$$

$$= \rho_k a_k\cos\Psi - \rho_k b_k\sin\Psi + j(\rho_k b_k\cos\Psi - \rho_k a_k\sin\Psi)$$

avec :

$$\Psi = 2\pi k/NT + \varphi_k - \varphi_0$$

On a : $f_c = 1/2T$

donc :

$$V(t) = Re\{e^{2i\pi f_c t}.\sum_{k=P}^{Q} H_k c_k e^{2i\pi(k-N/2)t/NT}\}$$

soit :

$$V(t) = Re\{Y(t).e^{2i\pi f_c t}\}$$

avec :

$$Y(t) = \sum_{k=P}^{Q} H_k c_k e^{2i\pi(k-N/2)t/NT}$$

donc :

$$V(t) = Re\{Y(t)\}\cos 2\pi f_c t - Im\{Y(t)\}\sin 2\pi f_c t$$

soit :

$$V(t) = I(t)\cos 2\pi f_c t - Q(t)\sin 2\pi f_c t$$

avec :

$$I(t) = Re\{Y(t)\}$$
$$Q(t) = Im\{Y(t)\}$$

Le signal de l'invention $x(t) = I(t) \cos 2\pi f_c t - Q(t)\sin 2\pi f_c t$ peut être synthétisé en numérique à l'émission, à partir des échantillons $I(nT)$ et $Q(nT)$ ($1/T$ étant supérieur ou égal au double de la fréquence maximale de I et Q), et avec $f_c = 1/2T$ .

On a donc : $x(t) = I(t)\cos\pi t/T - Q(t)\sin\pi t/T$

$x(t)$ est déterminé complètement par les valeurs des $x(nT/2)$ :

$$x(nT/2) = I(nT/2)\cos n\pi/2 - Q(nT/2)\sin n\pi/2.$$

Le tableau I suivant montre les valeurs que prend $x(t)$, tous les $T/2$ :

TABLEAU I

| n | 0 | 1 | 2 | 3 | 4 | 5 | 6 |
|---|---|---|---|---|---|---|---|
| $\cos n\pi/2$ | +1 | 0 | -1 | 0 | +1 | 0 | -1 |
| $-\sin n\pi/2$ | 0 | -1 | 0 | +1 | 0 | -1 | 0 |
| | I(0) | | I(T) | | I(2T) | | I(3T) |
| | | Q(T/2) | | Q(T+T/2) | | Q(2T+T/2) | |
| x(nT/2) | I(0) | -Q(T/2) | -I(T) | Q(T+T/2) | I(2T) | -Q(2T+T/2) | -I(3T) |

La figure 9 est un schéma synoptique d'un dispositif réalisant une telle synthèse de $x(t)$.

Les valeurs $I(nT)$ délivrées par la FFT$^{-1}$ (voir figure 1) sont soumises à un multiplicateur 91 qui effectue une multiplication par $(-1)^n$. Les valeurs $Q(nt)$ sont transmises à un module 92 de synthèse des valeurs $Q(nT + T/2)$ . Ces dernières sont ensuite multipliées (93) par $(-1)^{n+1}$.

Après les multiplications 91 et 93, les données $(-1)^n.I(nT)$ et $(-1)^{n+1}.Q(nT+T/2)$ sont multiplexées (94), de façon à créer le signal $x(n.T/2)$ 95. Préalablement, les données $I(nT)$ sont retardées (96) d'un même retard que celui introduit par le module de synthèse 92.

Le signal 95 est ensuite converti en un signal analogique, à l'aide d'un convertisseur numérique/analogique 97, puis filtré à l'aide d'un filtre passe-bas 98 de fréquence de coupure $1/T$.

13

Avantageusement, ce filtre inclut une préaccentuation 99 (correction de maintien). Dans le cas d'un signal OFDM, pour éviter que le filtre passe-bas 98 inclut la correction de maintien, on peut préaccentuer dans le domaine fréquentiel (avant FFT$^{-1}$) les amplitudes des symboles complexes modulant les porteuses hautes selon la loi en x/sinx du filtre.

Le module de synthèse 92 des échantillons Q(nT+T/2) à partir des Q(nT) peut être constitué d'un filtre interpolateur d'ordre 2, suivi d'un décimateur d'ordre 2, qui supprime les éléments Q(nT) entrants. En pratique, on peut le réaliser avec un seul filtre numérique à fréquence 1/T, tel qu'illustré en figure 10 : le filtre 101 délivre les éléments Q(nT+T/2) 102, et supprime les éléments Q(nT) 103.

Idéalement, ce filtre est rectangulaire de période 2/T et cyclique. Il a donc pour réponse impulsionnelle les échantillons illustrés en figure 11.

La suite des coefficients du filtre est donc :

$$a_{-5} \quad 0 \quad a_{-3} \quad 0 \quad a_{-1} \quad 1 \quad a_1 \quad 0 \quad a_3 \quad 0 \quad a_5$$

Ce filtre, soumis à l'entrée 0, Q(T), 0, Q(2T), 0, Q(3T), 0, Q(4T), 0,... donne une fois sur deux en sortie les échantillons Q(nT), et l'autre fois les Q(nT+T/2) . Comme on ne veut connaître que les Q(nT+T/2) , on peut les obtenir simplement à partir d'un filtre fonctionnant à la fréquence 1/T, de coefficients ... $a_{-5}$ $a_{-3}$ $a_{-1}$ $a_1$ $a_3$ $a_5$..., excité par les Q(nT). En pratique, on choisira un filtre optimisé vis-à-vis de l'échantillonnage brutal du sinx/x.

Ce filtre a un temps de propagation de poupe (TPG) non nul. Sa réponse impulsionnelle h(t) peut s'écrire :

$$h(t) = \{ \sum_{i=0}^{N-1} N\text{-}1 \; \alpha_i [\delta(t\text{-}T/2\text{-}iT) + \delta(t+T/2+iT)] \} * \delta(t\text{-}T/2\text{-}(N\text{-}1)T)$$

(filtre à 2N coefficients)
soit:

$$H(\nu) = A(\nu).e^{-2i\pi\nu(T/2+(N-1)T)}$$

où A(υ) est la transformée de Fourier du premier terme (réelle).

Le TPG vaut T/2+(N-1)T .

Cela correspond à un retard de traitement de la branche "Q". On veillera à retarder la branche "I" du même retard 96.

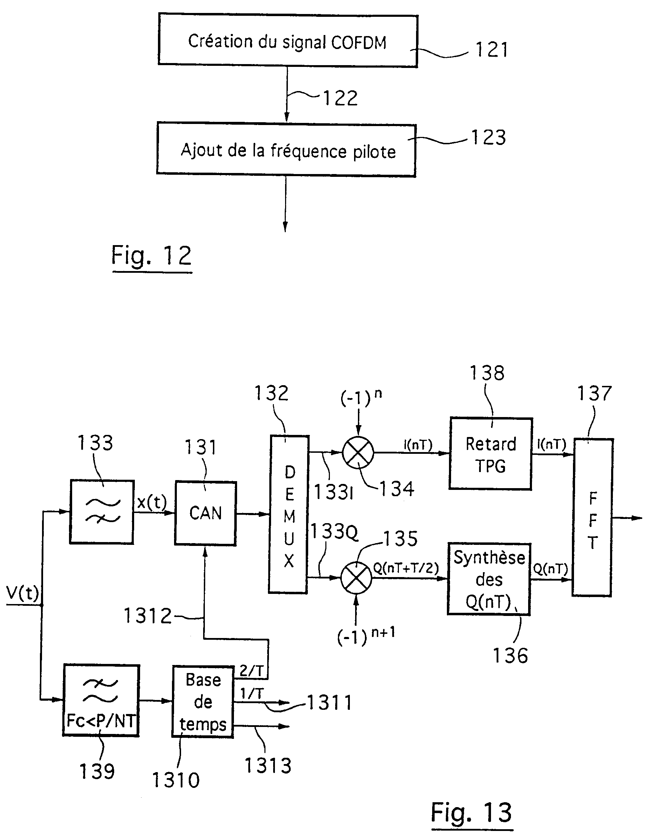

Dans un autre mode de réalisation, le signal selon l'invention peut être réalisé selon le procédé illustré en figure 12. Une première étape 121 consiste à construire, classiquement, un signal COFDM 122. Ensuite, une fré-quence pilote $f_p$ est adjointe (123) au signal 122, de façon à obtenir le signal x(t) illustré en figure 4.

Dans tous les cas, il est nécessaire de reconstruire, à la réception les échantillons I(nT) et Q(nT) à partir d'un signal :

$$x(t) = I(t)\cos 2nf_c t - Q(t)\sin 2nf_c t$$

avec $f_c = 1/2T$ .

Le signal x(t) est obtenu bien sûr par filtrage passe-haut 133 du signal v(t) délivré par les démodulateurs des figures 6 et 7. Il correspond au signal COFDM proprement dit 43 du signal de la figure 4.

La reconstruction des valeurs I(nT) et Q(nT) se fait de façon symétrique à la synthèse du signal x(t), ainsi que cela est illustré en figure 13.

On échantillonne (131) donc x(t) au rythme 2/T, pour obtenir la séquence $\{x(nT/2)\}_n$ comprenant : I(0) - Q(T/2)    -I(T) Q(T+T/2) etc...

Un démultiplexeur 132 délivre alternativement des données $133_I$ et $133_Q$ qui sont respectivement multi-pliées par $(-1)^n$ 134 et $(-1)^{n+1}$ 135 pour fournir les valeurs I(nT) et Q(nT+T/2) . Un module 136 de synthèse des Q(nT) effectue une interpolation d'ordre 2 pour fournir en entrée de la FFT 137 de modulation les valeurs Q(nT). Les valeurs I(nT) alimentent également la FFT 137 après avoir été retardées d'un retard TPG 138 égal à celui introduit par le module de synthèse 136.

Il est à noter qu'a priori, la phase de la porteuse n'est pas connue. x(t) peut généralement être de la forme :

$$x(t) = I(t) \cos(2\pi f_c t + \varphi) - Q(t) \sin(2\pi f_c t + \varphi)$$

$$\text{Alors } x(t) = Re\{(I(t) + iQ(t))e^{(2i\pi fct+\rho)}\}$$
$$= Re\{[(I(t) + iQ(t))e^{i\varphi}.e^{2i\pi fct}\}$$
$$= Re\{[(I(t)\cos\varphi - Q(t)\sin\varphi) + i(I(t)\sin\varphi + Q(t)\cos\varphi)]e^{2i\pi fct}\}$$

On obtient donc en entrée de la FFT 137, les couples d'échantillons :

$$(I(nT)\cos\varphi - Q(nT)\sin\varphi), \ (I(nT)\sin\varphi + Q(nT)\cos\varphi).$$

Le traitement numérique qui sera effectué après FFT, consistant à démoduler chaque porteuse du signal COFDM, s'affranchira classiquement de cette rotation de phase.

Si la fréquence pilote $f_p$ est modulée par un signal de référence c(t), le récepteur comprend une seconde branche de génération de base de temps. Elle comprend un filtre passe-bas 139, de fréquence de coupure inférieure à P/NT, qui isole la fréquence pilote $f_p$. Ensuite, un module de base de temps 1310 génère un ou plusieurs signaux, et par exemple :

- un signal d'horloge à la fréquence 1/T 1311 ;
- un signal d'horloge à la fréquence 2/T 1312 ;
- une synchronisation de trame 1313.

Le signal d'horloge 1312 à 2/T est nécessaire pour recréer I et Q (fréquence du convertisseur 131), les échantillons pairs donnant la partie réelle de la FFT, et les échantillons impairs la partie imaginaire, décalée de T/2.

Les signaux 1311 (synchronisation symbole) et 1313 sont utilisés classiquement par les circuits de décodage CODFM suivant la FFT 137.

## Revendications

1. Un signal de données numériques apte à être reçu par au moins un récepteur ($32_1$ à $32_3$) comprenant des moyens (39) de démodulation de signaux modulés en amplitude à bande latérale réduite, ledit signal présentant une bande de fréquence vierge ne portant aucun signal utile et une pluralité de fréquence porteuses, chacune desdites fréquences porteuses étant modulée par des éléments de données distincts représentatifs d'un signal numérique source à transmettre, caractérisé en ce qu'il est organisé de la façon suivante :

   - une fréquence pilote : $f_p$ (41) ;
   - ladite bande de fréquence vierge $f_p$ à $f_p + P.\Delta f$ (42) ;
   - ladite pluralité de fréquences porteuses : $f_p + P.\Delta f$ à $f_p + Q.\Delta f$ (43),

     P étant un nombre entier strictement supérieur à 1,
     Q étant un nombre entier strictement supérieur à P, et
     $\Delta f$ étant l'écart de fréquence entre deux fréquences porteuses consécutives.

2. Signal selon la revendication 1, caractérisé en ce que ledit signal numérique source est organisé sous la forme d'une succession de symboles (S1 à SM) d'une durée prédéterminée $T_s$ comprenant chacun Q-P éléments de données distincts, chacun desdits symboles étant constitué d'une part d'un intervalle de garde (22) de durée prédéterminée $\Delta$ et d'autre part d'une partie utile de durée prédéterminée NT durant laquelle chacun desdits Q-P éléments de données d'un symbole module une desdites fréquences porteuses (21).

3. Signal selon la revendication 2, caractérisé en ce que ladite pluralité de fréquences porteuses est constituée de fréquences orthogonales, $\Delta f$ étant égal à 1/NT.

4. Signal selon l'une quelconque des revendications 1 à 3, caractérisé en ce que ladite fréquence pilote $f_p$ (41) est modulée en amplitude à faible indice par un signal de référence.

5. Signal selon les revendications 2 et 4, caractérisé en ce que ledit signal de référence (41) porte un signal représentatif de la fréquence d'émission desdits symboles (S1 à SM).

6. Signal selon la revendication 5, caractérisé en ce que ledit signal de référence comprend un signal périodique de période $2.T_s = 2(NT+\Delta)$ .

**7.** Signal selon la revendication 2 et l'une quelconque des revendications 4 à 6, caractérisé en ce que lesdits symboles (S1 à SM) sont regroupés en trames de symboles, chacune desdites trames comprenant au moins deux symboles, et en ce que ledit signal de référence porte un signal (51) représentatif de la fréquence d'émission desdites trames.

**8.** Signal selon les revendications 6 et 7, caractérisé en ce que ledit signal de référence comprend au début de chacune desdites trames un motif prédéfini (51) rompant la périodicité dudit signal de référence.

**9.** Signal selon l'une quelconque des revendications 1 à 8, caractérisé en ce que ledit signal numérique source comprend au moins un signal appartenant au groupe comprenant :

-   les signaux d'images ;
-   les signaux de sons ;
-   les signaux de données.

**10.** Signal selon l'une quelconque des revendications 1 à 9, caractérisé en ce que ladite bande de fréquence vierge (42) occupe une largeur de bande de l'ordre de 100 kHz, et en ce que ladite pluralité de fréquences porteuses (43) occupe une largeur de bande de l'ordre de 8 MHz.

**11.** Procédé de transmission d'un signal de données numériques apte à être reçu par au moins un récepteur ($32_1$ à $32_3$) comprenant des moyens (39) de démodulation de signaux modulés en amplitude à bande latérale réduite, caractérisé en ce qu'il comprend les étapes suivantes :

-   création d'éléments de données représentatifs d'un signal numérique source ;
-   création (12, 14 ; 121) de symboles (15), chaque symbole comprenant Q-P éléments de données, P étant un nombre entier strictement supérieur à 1 et Q étant un nombre entier strictement supérieur à P ;
-   modulation (16 ; 121) d'une pluralité de fréquences porteuses $fp+P.\Delta f$ à $f_p+Q.\Delta f$ par lesdits symboles (15), de façon à former un premier signal (43), chacune desdites fréquences porteuses étant modulée par un élément de données distinct de chaque symbole, $f_p$ étant une fréquence prédéterminée et $\Delta f$ étant l'écart de fréquence entre deux fréquences porteuses consécutives ;
-   ajout audit premier signal (43 ; 123) d'une fréquence pilote $f_p$ (41), de façon à former un signal à transmettre, la bande de fréquence $f_p + P. \Delta f$ (42) étant une bande de fréquence vierge, ne portant aucun signal utile ;
-   transmission dudit signal à transmettre.

**12.** Procédé selon la revendication 11, caractérisé en ce qu'il comprend de plus une étape de :

-   modulation en amplitude à faible indice de ladite fréquence pilote $f_p$ (41) par un signal de référence portant notamment des informations de synchronisation pour la réception dudit premier signal.

**13.** Procédé selon l'une quelconque des revendications 11 et 12, caractérisé en ce que ladite étape de modulation (16) délivre deux séries de valeurs I(nT) et Q(nT) par une opération de transformation mathématique, à la fréquence d'échantillonnage 1/T, et en ce qu'il comprend également les étapes suivantes :

-   multiplication (91) des échantillons I(nT) par $(-1)^n$, de façon à obtenir des valeurs x(nT) ;
-   synthèse (92) de valeurs Q(nT+T/2) à partir desdits échantillons Q(nT) ;
-   multiplication (93) des valeurs Q(nT+T/2) par $(-1)^{n+1}$, de façon à obtenir des valeurs x(nT+T/2) ;
-   application (96) auxdites valeurs x(nT) d'un retard de compensation de durée égale à celle de ladite étape de synthèse (92) ;
-   multiplexage (94) desdites valeurs x(nT) retardées et x(nT+T/2) , de façon à obtenir des valeurs x(nT/2) ;
-   conversion numérique/analogique (96) desdites valeurs x(nT/2).

**14.** Procédé selon la revendication 13, caractérisé en ce qu'il comprend, avant ladite étape de modulation, une étape de correction de maintien comprenant un filtrage passe-bas à la fréquence de coupure 1/T et avec préaccentuation des fréquences porteuses proches de 1/T.

**15.** Procédé de réception et de décodage d'un signal de données numériques, apte à être reçu par au moins un récepteur ($32_1$ à $32_3$) comprenant des moyens (39) de démodulation de signaux modulés en amplitude à bande latérale réduite, caractérisé en ce que ledit signal comprend :

**16**

- une fréquence pilote : $f_p$ (41) ;
- une bande de fréquence vierge $f_p$ à $f_p+P.\Delta f$ (42) ne portant aucun signal utile ;
- une pluralité de fréquences porteuses $f_p+P.\Delta f$ à $f_p+Q.\Delta f$ (43), chacune desdites fréquences porteuses étant modulée par des éléments de données distincts représentatifs d'un signal numérique source à transmettre,

P étant un nombre entier strictement supérieur à 1,
Q étant un nombre entier strictement supérieur à P, et
$\Delta f$ étant l'écart de fréquence entre deux fréquences porteuses consécutives, et en ce que le procédé comprend les étapes suivantes :

- réception (61 ; 71) du signal de données numériques transmis ;
- récupération (63 ; 75) de la fréquence pilote $f_p$ ;
- démodulation (66 ; 73) selon les techniques de démodulation appliquées aux signaux modulés en amplitude à bande latérale réduite du signal reçu, par multiplication dudit signal reçu par ladite fréquence pilote $f_p$ récupérée ;
- filtrage passe-bas (67 ; 74) éliminant notamment les composantes fréquentielles de l'ordre de $2.f_p$ ;
- décodage (91 à 98 ; 112, 114, 116, 117) du signal démodulé.

**16.** Procédé selon la revendication 15, caractérisé en ce que ladite étape de récupération de la fréquence pilote $f_p$ comprend une des étapes appartenant au groupe comprenant les étapes de :

- filtrage à bande étroite (64) centré sur la fréquence $f_p$ du signal reçu puis écrêtage (65) au-dessus d'une amplitude maximum ;
- récupération de ladite fréquence pilote à l'aide d'une boucle à verrouillage de phase (75) alimentée par le signal reçu.

**17.** Procédé selon l'une quelconque des revendications 15 et 16, caractérisé en ce que ladite étape de décodage du signal démodulé comprend les étapes suivantes :

- récupération (133) de ladite pluralité de fréquences porteuses, par filtrage passe-haut dudit signal démodulé ;
- conversion analogique/numérique (131) du signal formé de ladite pluralité de fréquences porteuses ;
- démodulation (137) de chacune desdites fréquences porteuses, de façon à récupérer les éléments de données formant le signal numérique source.

**18.** Procédé selon la revendication 17, caractérisé en ce que ladite fréquence pilote $f_p$ (41) est modulée en modulation d'amplitude par un signal de référence, et en ce qu'il comprend les étapes de :

- récupération (139) dudit signal de référence, par filtrage passe-bas dudit signal démodulé ;
- génération (1310), à partir dudit signal de référence, d'au moins un des signaux appartenant au groupe comprenant :

  - un signal d'horloge à la fréquence 1/T (1311) ;
  - un signal d'horloge à la fréquence 2/T (1312) ;
  - un signal (1313) indiquant le début de chacune des trames dudit signal démodulé.

**19.** Procédé selon l'une quelconque des revendications 17 et 18, caractérisé en ce que ladite étape (131) de conversion analogique/numérique délivre, à la fréquence d'échantillonage 2/T, des échantillons x(n.T/2), et en ce que ladite étape de démodulation de chacune desdites fréquences porteuses comprend les étapes de :

- répartition alternative (132) desdits échantillons sur une première et une seconde voies, ladite première voie recevant les échantillons x(nT) et ladite seconde voie recevant les échantillons x(nT+T/2) ;
- multiplication (134) des échantillons x(nT) de ladite première voie par $(-1)^n$, de façon à obtenir des valeurs I(nT) ;
- multiplication (135) des échantillons x(nT+T/2) de ladite seconde voie par $(-1)^{n+1}$, de façon à obtenir des valeurs Q(nT+T/2) ;
- synthèse (136) de valeurs Q(nT), à partir desdites valeurs Q(nT+T/2) ;
- introduction sur ladite première voie d'un retard de compensation (138) de durée égale à celle de ladite étape de synthèse (136) ;

- transformation de Fourier (137) desdites valeurs I(nT) et Q(nT), délivrant lesdits éléments de données représentatifs dudit signal numérique source.

20. Procédé selon l'une quelconque des revendications 13 et 19, caractérisé en ce que ladite étape de synthèse (136) comprend les étapes de :

- filtrage d'interpolation d'ordre 2 desdites valeurs Q(nT+T/2) ;
- décimation d'ordre 2.

21. Dispositif de réception et de décodage d'un signal de données numériques, apte à être reçu par au moins un récepteur ($32_1$ à $32_3$) comprenant des moyens (39) de démodulation de signaux modulés en amplitude à bande latérale réduite, caractérisé en ce que ledit signal comprend :

- une fréquence pilote : $f_p$ (41) ;
- une bande de fréquence vierge $f_p$ à $f_p+P.\Delta f$ (42) ne portant aucun signal utile ;
- une pluralité de fréquences porteuses $f_p+P.\Delta f$ à $f_p+Q.\Delta f$ (43), chacune desdites fréquences porteuses étant modulée par des éléments de données distincts représentatifs d'un signal numérique source à transmettre,

P étant un nombre entier strictement supérieur à 1,
Q étant un nombre entier strictement supérieur à P, et
$\Delta f$ étant l'écart de fréquence entre deux fréquences porteuses consécutives, et en ce que le dispositif comprend :

- des moyens de réception (61 ; 71) du signal de données numériques transmis ;
- des moyens de récupération (63 ; 75) de la fréquence pilote $f_p$ ;
- des moyens de démodulation (66 ; 73) selon les techniques de démodulation appliquées aux signaux modulés en amplitude à bande latérale réduite du signal reçu, par multiplication dudit signal reçu par ladite fréquence pilote $f_p$ récupérée ;
- des moyens de filtrage passe-bas (67 ; 74) éliminant notamment les composantes fréquentielles de l'ordre de $2.f_p$ ;
- des moyens de décodage (91 à 98 ; 112, 114, 116, 117) du signal démodulé.

22. Dispositif selon la revendication 21, caractérisé en ce qu'il comprend des moyens de décodage comprenant :

- des moyens de récupération (133) de ladite pluralité de fréquences porteuses, par filtrage passe-haut dudit signal démodulé ;
- des moyens de conversion analogique/numérique (131) du signal formé de ladite pluralité de fréquences porteuses ;
- des moyens de démodulation (137) de chacune desdites fréquences porteuses, de façon à récupérer les éléments de données formant le signal numérique source.

23. Utilisation d'un signal de données numériques selon l'une quelconque des revendications 1 à 10 pour la diffusion de signaux numériques sur un réseau câblé.

**Claims**

1. A digital data signal able to be received by at least one receiver ($32_1$ to $32_3$) comprising means (39) for demodulating reduced side band amplitude-modulated signals, the said signal exhibiting a virgin frequency band carrying no useful signal and a plurality of barrier frequencies, each of the said carrier frequencies being modulated by separate data elements representative of a source digital signal to be transmitted, characterized in that it is organized in the following manner:

- a pilot frequency: $f_p$(41);
- the said virgin frequency band $f_p$ to $f_p+P.\Delta f$(42);
- the said plurality of carrier frequencies: $f_p+P.\Delta f$ to $f_p+Q.\Delta f$(43).

P being an integer number strictly greater than 1,
Q being an integer number strictly greater than P, and

$\Delta$f being the frequency gap between two consecutive carrier frequencies.

2. Signal according to Claim 1, characterized in that the said source digital signal is organized in the form of a succession of symbols (S1 to SM) of a predetermined duration $T_s$ each comprising Q-P separate data elements, each of the said symbols consisting on the one hand of a guard interval (22) of predetermined duration $\Delta$ and on the other hand of a useful part of predetermined duration NT during which each of the said Q-P data elements of a symbol modulates one of the said carrier frequencies (21).

3. Signal according to Claim 2, characterized in that said plurality of carrier frequencies consists of orthogonal frequencies, $\Delta$f being equal to 1/NT.

4. Signal according to any one of Claims 1 to 3, characterized in that the said pilot frequency $f_p$(41) is amplitude-modulated at low index by a reference signal.

5. Signal according to Claims 2 and 4, characterized in that the said reference signal (41) carries a signal representative of the frequency of transmission of the said symbols (S1 to SM).

6. Signal according to Claim 5, characterized in that the said reference signal comprises a periodic signal of period $2.T_s=2(NT+\Delta)$ .

7. Signal according to Claim 2 and any one of Claims 4 to 6, characterized in that the said symbols (S1 to SM) are grouped into symbol frames, each of the said frames comprising at least two symbols, and in that the said reference signal carries a signal (51) representative of the frequency of transmission of the said frames.

8. Signal according to Claims 6 and 7, characterized in that the said reference signal comprises at the start of each of the said frames a predefined pattern (51) breaking the periodicity of the said reference signal.

9. Signal according to any one of Claims 1 to 8 characterized in that the said source digital signal comprises at least one signal belonging to the group comprising:

   - picture signals;
   - sound signals;
   - data signals.

10. Signal according to any one of Claims 1 to 9, characterized in that the said virgin frequency band (42) occupies a bandwidth of the order of 100 kHz, and in that the said plurality of carrier frequencies (43) occupies a bandwidth of the order of 8 MHz.

11. Process for transmitting a digital data signal able to be received by at least one receiver ($32_1$ to $32_3$) comprising means (39) for demodulating reduced side band amplitude-modulated signals, characterized in that it comprises the following steps:

   - creation of data elements representative of a source digital signal;
   - creation (12, 14; 121) of symbols (15), each symbol comprising Q-P data elements, P being an integer number strictly greater than 1 and Q being an integer number strictly greater than P.
   - modulation (16; 121) of a plurality of carrier frequencies $f_p+P.\Delta f$ to $f_p+Q.\Delta f$ by the said symbols (15), so as to form a first signal (43), each of the said carrier frequencies being modulated by a separate data element of each symbol, $f_p$ being a predetermined frequency and $\Delta$f being the frequency gap between two consecutive carrier frequencies;
   - addition to the said first signal (43; 123) of a pilot frequency $f_p$(41), in such a way as to form a signal to be transmitted, the frequency band $f_p+P.\Delta f$(42) being a virgin frequency band, carrying no useful signal;
   - transmission of the said signal to be transmitted.

12. Process according to Claim 11, characterized in that it furthermore comprises a step of:

   - amplitude-modulation at low index of the said pilot frequency $f_p$(41) by a reference signal carrying in particular synchronization information in respect of the reception of the said first signal.

**13.** Process according to either one of Claims 11 and 12, characterized in that the said modulation step (16) delivers two series of values I(nT) and Q(nT) through a mathematical transformation operation, at the sampling frequency 1/T, and in that it also comprises the following steps:

- multiplication (91) of the samples I(nT) by $(-1)^n$, so as to obtain values x(nT);
- synthesis (92) of values Q(nT+T/2) on the basis of the said samples Q(nT);
- multiplication (93) of the values Q(nT+T/2) by $(-1)^{n+1}$, so as to obtain values x(nT+T/2);
- an application (96) to the said values x(nT) of a compensation delay of duration equal to that of the said synthesis step (92);
- multiplexing (94) of the said values x(nT) delayed and x(nT+T/2), so as to obtain values x(nT/2);
- digital/analogue conversion (96) of the said values x(nT/2).

**14.** Process according to Claim 13, characterized in that it comprises, before the said modulation step, a holding correction step comprising a low pass filtering at the cut-off frequency 1/T and with pre-emphasis of the carrier frequencies close to 1/T.

**15.** Process for receiving and decoding a digital data signal, able to be received by at least one receiver ($32_1$ to $32_3$) comprising means (39) for demodulating reduced side band amplitude-modulated signals, characterized in that the said signal comprises:

- a pilot frequency: $f_p$(41);
- a virgin frequency band $f_p$ to $f_p$+P.$\Delta$f(42) carrying no useful signal;
- a plurality of carrier frequencies $f_p$+P.$\Delta$f to $f_p$+Q.$\Delta$f(43), each of the said carrier frequencies being modulated by separate data elements representative of a source digital signal to be transmitted,

P being an integer number strictly greater than 1,
Q being an integer number strictly greater than P, and
$\Delta$f being the frequency gap between two consecutive carrier frequencies, and in that the process [lacuna] characterized in that it comprises the following steps:

- reception (61; 71) of the digital data signal transmitted;
- recovery (63; 75) of the pilot frequency $f_p$;
- demodulation (66; 73) according to the demodulation techniques applied to the reduced side band amplitude-modulated signals of the signal received, by multiplying the said signal received by the said recovered pilot frequency $f_p$;
- low pass filtering (67; 74) eliminating in particular the frequency components of the order of 2.$f_p$;
- decoding (91 to 98; 112, 114, 116, 117) of the demodulated signal.

**16.** Process according to Claim 15, characterized in that the said step of recovering the pilot frequency $f_p$ comprises one of the steps belonging to the group comprising the steps of:

- narrow band filtering (64) centred on the frequency $f_p$ of the signal received then clipping (65) above a maximum amplitude;
- recovery of the said pilot frequency with the aid of a phase-locked loop (75) fed with the signal received.

**17.** Process according to either one of Claims 15 and 16, characterized in that the said step of decoding the demodulated signal comprises the following steps:

- recovery (133) of the said plurality of carrier frequencies, by high pass filtering of the said demodulated signal;
- analogue/digital conversion (131) of the signal formed of the said plurality of carrier frequencies;
- demodulation (137) of each of the said carrier frequencies, so as to recover the data elements forming the source digital signal.

**18.** Process according to Claim 17, characterized in that the said pilot frequency $f_p$(41) is modulated by amplitude modulation by a reference signal, and in that it comprises the steps of :

- recovery (139) of the said reference signal, by low pass filtering of the said demodulated signal;
- generation (1310), from the said reference signal, of at least one of the signals belonging to the group comprising:

- a clock signal at the frequency 1/T (1311);
- a clock signal at the frequency 2/T (1312);
- a signal (1313) indicating the start of each of the frames of the said demodulated signal.

19. Process according to either one of Claims 17 and 18, characterized in that the said step (131) of analogue/digital conversion delivers, at the sampling frequency 2/T, samples $x(n.T/2)$ , and in that the said step of demodulating each of the said carrier frequencies comprises the steps of:

- alternate distributing (132) of the said samples over a first and over a second pathway, the said first pathway receiving the samples $x(nT)$ and the said second pathway receiving the samples $x(nT+T/2)$ ;
- multiplication (134) of the samples $x(nT)$ of the said first pathway by $(-1)^n$, so as to obtain values $I(nT)$;
- multiplication (135) of the samples $x(nT+T/2)$ of the said second pathway by $(-1)^{n+1}$, so as to obtain values $Q(nT+T/2)$ ;
- synthesis (136) of values $Q(nT)$, from the said values $Q(nT+T/2)$ ;
- introduction onto the said first pathway of a compensation delay (138) of duration equal to that of the said synthesis step (136);
- Fourier transformation (137) of the said values $I(nT)$ and $Q(nT)$, delivering the said data elements representative of the said source digital signal.

20. Process according to either one of Claims 13 and 19, characterized in that the said synthesis step (136) comprises the steps of:

- interpolation filtering of order 2 of the said values $Q(nT+T/2)$ ;
- decimation of order 2.

21. Device for receiving and decoding a digital data signal, able to be received by at least one receiver ($32_1$ to $32_3$) comprising means (39) for demodulating reduced side band amplitude-modulated signals, characterized in that the said signal comprises:

- a pilot frequency: $f_p(41)$;
- a virgin frequency band $f_p$ to $f_p+P.\Delta f(42)$ carrying no useful signal;
- a plurality of carrier frequencies $f_p+P.\Delta f$ to $f_p+Q.\Delta f(43)$, each of the said carrier frequencies being modulated by separate data elements representative of a source digital signal to be transmitted,

   P being an integer number strictly greater than 1,
   Q being an integer number strictly greater than P, and
   $\Delta f$ being the frequency gap between two consecutive carrier frequencies, and in that the device comprises:

- means (61; 71) for receiving the digital data signal transmitted;
- means (63; 75) for recovering the pilot frequency $f_p$;
- means (66; 73) for demodulating according to the demodulation techniques applied to the reduced side band amplitude-modulated signals of the signal received, by multiplying the said signal received by the said recovered pilot frequency $f_p$;
- means of low pass filtering (67; 74) eliminating in particular the frequency components of the order of $2.f_p$;
- means (91 to 98; 112, 114, 116, 117) for decoding the demodulated signal.

22. Device according to Claim 21, characterized in that it comprises decoding means comprising:

- means (133) for recovering the said plurality of carrier frequencies, by high pass filtering of the said demodulated signal;
- means (131) of analogue/digital conversion of the signal formed of the said plurality of carrier frequencies;
- means (137) for demodulating each of the said carrier frequencies, so as to recover the data elements forming the source digital signal.

23. Use of a digital data signal according to any one of Claims 1 to 10 for the broadcasting of digital signals over a cable network.

**Patentansprüche**

1. Digitales Datensignal, das von mindestens einem Empfänger ($32_1$ bis $32_3$) empfangen werden kann, der über Mittel (39) zum Demodulieren von Signalen verfügt, die bei reduziertem Seitenband amplitudenmoduliert sind, wobei das Signal ein freies Frequenzband aufweist, das kein Nutzsignal trägt sowie eine Vielzahl von Trägerfrequenzen, die jeweils von verschiedenen Datenelementen moduliert werden, die für ein zu sendendes, digitales Quellsignal repräsentativ sind, dadurch gekennzeichnet, daß es folgendermaßen strukturiert ist:

   - eine Pilotfrequenz: $f_p$ (41);
   - das freie Ferquenzband $f_p$ bis $f_p + P \cdot \Delta f$ (42);
   - die Vielzahl von Trägerfrequenzen: $f_p + P \cdot \Delta f$ bis $f_p + Q \cdot \Delta f$ (43),

   wobei P eine ganze Zahl ist, die streng größer als 1 sein muß,
   Q eine ganze Zahl ist, die streng größer als P sein muß und
   $\Delta f$ der Frequenzabstand zwischen zwei aufeinanderfolgende Trägerfrequenzen ist.

2. Signal nach Anspruch 1,
   dadurch gekennzeichnet, daß das digitale Quellsignal in der Form einer Symbolfolge (S1 bis SM) von vorgegebener Dauer $T_s$ strukturiert ist, wobei jedes Symbol jeweils Q-P verschiedene Datenelemente umfaßt und einerseits aus einem Schutzintervall (22) von vorgegebener Dauer $\Delta$ und andererseits aus einem nützlichen Teil von vorgegebener Dauer NT gebildet wird, wobei während der Zeit NT jedes der Q-P Datenelemente eines Symbols eine der Trägerfrequenzen (21) moduliert.

3. Signal nach Anspruch 2,
   dadurch gekennzeichnet, daß die Vielzahl von Trägerfrequenzen aus orthogonalen Frequenzen gebildet wird, wobei $\Delta f$ gleich 1/NT ist.

4. Signal nach einem der Ansprüche 1 bis 3,
   dadurch gekennzeichnet, daß die Pilotfrequenz $f_p$ (41) von einem Referenzsignal mit schwachem Index amplitudenmoduliert wird.

5. Signal nach den Ansprüchen 2 und 4,
   dadurch gekennzeichnet, daß das Referenzsignal (41) ein Signal trägt, das für die Sendefrequenz der Symbole (S1 bis SM) repräsentativ ist.

6. Signal nach Anspruch 5,
   dadurch gekennzeichnet, daß das Referenzsignal ein periodisches Signal mit der Periode $2 \cdot T_s = 2(NT+\Delta)$ umfaßt.

7. Signal nach Anspruch 2 und einem der Ansprüche 4 bis 6,
   dadurch gekennzeichnet, daß die Symbole (S1 bis SM) in Symbolrastern geordnet sind, wobei jeder Raster mindestens zwei Symbole umfaßt und, daß das Referenzsignal ein Signal (51) trägt, welches für die Sendefrequenz der Raster repräsentativ ist.

8. Signal nach den Ansprüchen 6 und 7,
   dadurch gekennzeichnet, daß das Referenzsignal am Anfang eines jeden Rasters ein vorgegebenes Motiv (51) umfaßt, welches die Periodizität des Referenzsignals aufhebt.

9. Signal nach einem der Ansprüche 1 bis 8,
   dadurch gekennzeichnet, daß das digitale Quellsignal mindestens ein Signal aus der Gruppe enthält, die folgendes umfaßt:

   - Bildsignale;
   - Tonsignale;
   - Datensignale.

10. Signal nach einem der Ansprüche 1 bis 9,
    dadurch gekennzeichnet, daß das freie Frequenzband (42) eine Bandbreite von der Größenordnung von 100 kHz belegt und, daß die Vielzahl von Trägerfrequenzen (43) eine Bandbreite von der Größenordnung von 8 MHz belegt.

**11.** Sendeverfahren für ein digitales Datensignal, das von mindestens einem Empfänger ($32_1$ bis $32_3$) empfangen werden kann, der über Mittel (39) zum Demodulieren von Signalen verfügt, die bei reduziertem Seitenband amplitudenmoduliert sind, dadurch gekennzeichnet, daß es die folgenden Schritte umfaßt:

- Erzeugen von Datensignalen, die für ein digitales Quellsignal repräsentativ sind;
- Erzeugen (12, 14; 121) von Symbolen (15), die jeweils Q-P Datenelemente umfassen, wobei P eine ganze Zahl ist, die streng größer als 1 und Q eine ganze Zahl ist, die streng größer als P sein muß;
- Modulieren (16; 121) einer Vielzahl von Trägerfrequenzen $f_p + P \cdot \Delta f$ bis $f_p + Q \cdot \Delta f$ durch die Symbole (15), um ein erstes Signal (43) zu bilden, wobei jede der Trägerfrequenzen von einem verschiedenen Datenelement eines jeden Symbols moduliert wird, wobei $f_p$ eine vorgegebene Frequenz und $\Delta f$ der Frequenzabstand zwischen zwei aufeinanderfolgende Trägerfrequenzen ist:
- Hinzufügen einer Pilotfrequenz $f_p$(41) an das erste Signal (43; 123), um ein zu sendendes Signal zu bilden, wobei das Frequenzband $f_p + P \cdot \Delta f$ (42) ein freies Frequenzband ist, das kein Nutzsignal trägt;
- Senden des zu übertragenden Signals.

**12.** Verfahren nach Anspruch 11,
dadurch gekennzeichnet, daß es den folgenden zusätzlichen Schritt umfaßt:

- Amplitudenmodulation bei schwachem Index der Pilotfrequenz $f_p$ (41) durch ein Referenzsignal, das insbesondere Synchronisierungsinformationen zum Empfang des ersten Signals trägt.

**13.** Verfahren nach einem der Ansprüche 11 und 12,
dadurch gekennzeichnet, daß der Modulationsschritt (16) zwei Reihen von Werten I(nT) und Q(nT) mittels einer mathematischen Transformation bei der Abtastfrequenz 1/T liefert und, daß es ebenfalls die folgenden Schritte umfaßt:

- Multiplizieren (91) der abgetasteten Werte I(nT) mit $(-1)^n$, um Werte x(nT) zu erhalten;
- Synthese (92) der Werte Q(nT + T/2) , ausgehend von den abgetasteten Werten Q(nT);
- Multiplizieren (93) der Werte Q(nT+T/2) mit $(-1)^{n+1}$, um Werte x(nT+T/2) zu erhalten;
- Anwendung (96) auf die Werte x(nT) einer Ausgleichsverzögerung der gleichen Dauer wie die des Syntheseschrittes (92);
- Multiplexieren (94) der verzögerten Werte x(nT) und der Werte x(nT+T/2) , um Werte x(nT/2) zu erhalten;
- digital/analog Umwandlung (96) der Werte x(nT/2).

**14.** Verfahren nach Anspruch 13,
dadurch gekennzeichnet, daß es vor dem Modulationsschritt einen Halte-Korrekturschritt umfaßt, der eine Tiefpaßfilterung bei der Abschnittfrequenz 1/T umfaßt, mit vorheriger Hervorhebung der nahe bei 1/T liegenden Trägerfrequenzen.

**15.** Sendeverfahren für ein digitales Datensignal, das von mindestens einem Empfänger ($32_1$ bis $32_3$) empfangen werden kann, der über Mittel (39) zum Demodulieren von Signalen verfügt, die bei reduziertem Seitenband amplitudenmoduliert sind, dadurch gekennzeichnet, daß das Signal folgendes umfaßt:

- eine Pilotfrequenz: $f_p$ (41);
- ein freies Frequenzband $f_p$ bis $f_p + P \cdot \Delta f$ (42), das kein Nutzsignal trägt;
- eine Vielzahl von Trägerfrequenzen $f_p + P \cdot \Delta f$ bis $f_p + Q \cdot \Delta f$ (43), wobei jede dieser Tägerfrequenzen von verschiedenen Datenelementen moduliert wird, die für ein zu sendendes digitales Quellsignal repräsentativ sind,

wobei P eine ganze Zahl ist, die streng größer als 1 sein muß,
Q eine ganze Zahl ist, die streng größer als P sein muß und
$\Delta f$ der Frequenzabstand zwischen zwei aufeinanderfolgende Trägerfrequenzen ist und,
daß das Verfahren die folgenden Schritte umfaßt:

- Empfang (61; 71) des gesendeten digitalen Datensignals;
- Wiedergewinnung (63; 75) der Pilotfrequenz $f_p$;

- Demodulieren (66; 73) des empfangenen Signals nach der Demodulationstechnik, die auf die bei reduziertem Seitenband amplitudenmodulierten Signale angewandt wird, durch Multiplikation des empfangenen Signals mit der wiedergewonnenen Pilotfrequenz $f_p$;
- Tiefpaßfilterung (67; 74), die insbesondere die Frequenzkomponenten der Größenordnung $2 \cdot f_p$ eliminiert;
- Dekodieren (91 bis 98; 112, 114, 116, 117) des demodulierten Signals.

16. Verfahren nach Anspruch 15,
    dadurch gekennzeichnet, daß der Schritt zum Wiedergewinnen der Pilotfrequenz $f_p$ eines der Schritte aus der folgenden Gruppe umfaßt:

    - eine Schmalbandfilterung (64), auf der Frequenz $f_p$ des empfangenen Signals zentriert, gefolgt von einer Scheitelwertbegrenzung (65) oberhalb einer maximalen Amplitude;
    - Wiedergewinnen der Pilotfrequenz mit Hilfe einer mit dem empfangenen Signal gespeisten Phasenverriegelungsschleife (75).

17. Verfahren nach einem der Ansprüche 15 oder 16,
    dadurch gekennzeichnet, daß der Schritt zum Dekodieren des demodulierten Signals die folgenden Schritte umfaßt:

    - Wiedergewinnen (133) der Vielzahl von Trägerfrequenzen durch Hochpaßfilterung des demodulierten Signals;
    - analog/digital Umwandlung (131) des durch die Vielzahl der Tägerfrequenzen gebildeten Signals;
    - Demodulieren (137) einer jeden Trägerfrequenz, um die Datenelemente wieder zu gewinnen, die das digitale Quellsignal bilden.

18. Verfahren nach Anspruch 17,
    dadurch gekennzeichnet, daß die Pilotfrequenz $f_p$ (41) von einem Referenzsignal amplitudenmoduliert wird und, daß es die folgenden Schritte umfaßt:

    - Wiedergewinnen (139) des Referenzsignals, durch Tiefpaßfilterung des demodulierten Signals;
    - ausgehend vom Referenzsignal, Erzeugen (1310) von mindestens einem der Signale aus der Gruppe, die folgendes umfaßt:

        - ein Taktgebersignal der Frequenz 1/T (1311);
        - ein Taktgebersignal der Frequenz 2/T (1312);
        - ein Signal (1313), das den Anfang eines jeden Rasters des demodulierten Signals anzeigt.

19. Verfahren nach einem der Ansprüche 17 oder 18,
    dadurch gekennzeichnet, daß der Schritt (13) zur analog/digital Umwandlung bei der Abtastfrequenz 2/T abgetastete Werte $x(n \cdot T/2)$ liefert und, daß der Demodulationsschritt einer jeden Trägerfrequenz die folgenden Schritte umfaßt:

    - abwechselndes Verteilen (132) der abgetasteten Werte auf einem ersten und einem zweiten Pfad, wobei der erste Pfad die abgetasteten Werte $x(nT)$ und der zweite Pfad die abgetasteten Werte $x(nT+T/2)$ empfängt;
    - Multiplizieren (134) der abgetasteten Werte $x(nT)$ des ersten Pfades mit $(-1)^n$, um Werte $I(nT)$ zu erhalten;
    - Multiplizieren (135) der abgetasteten Werte $x(nT+T/2)$ des zweiten Pfades mit $(-1)^{n+1}$, um Werte $Q(nT+T/2)$ zu erhalten;
    - Synthese (136) der Werte $Q(nT)$, ausgehend von den Werten $Q(nT+T/2)$;
    - Einfügen auf den ersten Pfad einer Ausgleichsverzögerung (138) der gleichen Dauer wie die des Syntheseschrittes (136);
    - Fourier-Transformation (137) der Werte $I(nT)$ und $Q(nT)$, welche die für das digitale Quellsignal repräsentative Datenelemente liefert.

20. Verfahren nach einem der Ansprüche 13 und 19,
    dadurch gekennzeichnet, daß der Syntheseschritt (136) die folgenden Schritte umfaßt:

    - Interpolationsfilterung 2. Ordnung der Werte $Q(nT+T/2)$;
    - Dezimierung 2. Ordnung.

**21.** Vorrichtung zum Empfangen und Dekodieren eines digitalen Datensignals, das von mindestens einem Empfänger ($32_1$ bis $32_3$) empfangen werden kann, der über Mittel (39) zum demodulieren von Signalen verfügt, die bei reduziertem Seitenband amplitudenmoduliert sind, dadurch gekennzeichnet, daß das Signal folgendes umfaßt:

- eine Pilotfrequenz $f_p$ (41);
- ein freies Frequenzband $f_p$ bis $f_p + P \cdot \Delta f$ (42), das kein Nutzsignal trägt;
- eine Vielzahl von Trägerfrequenzen $f_p + P \cdot \Delta f$ bis $f_p + Q \cdot \Delta f$ (43), wobei jede dieser Trägerfrequenzen von verschiedenen Datenelementen moduliert wird, die für ein zu sendendes digitales Quellsignal repräsentativ sind,

wobei P eine ganze Zahl ist, die streng größer als 1 sein muß,
Q eine ganze Zahl ist, die streng größer als P sein muß und
$\Delta f$ der Frequenzabstand zwischen zwei aufeinanderfolgende Trägerfrequenzen ist, und
daß die Vorrichtung folgendes umfaßt:

- Mittel zum Empfang (61; 71) des gesendeten digitalen Datensignals;
- Mittel zum Wiedergewinnen (63; 75) der Pilotfrequenz $f_p$;
- Mittel zum Demodulieren (66; 73) des empfangenen Signals nach der Demodulationstechnik, die auf die bei reduziertem Seitenband amplitudenmodulierten Signale angewandt wird, durch Multiplizieren des empfangenen Signals mit der wiedergewonnenen Pilotfrequenz $f_p$;
- Mittel für die Tiefpaßfilterung (67; 74), die insbesondere die Frequenzkomponenten der Ordnung $2 \cdot f_p$ eliminieren;
- Dekodiermittel (91 bis 98; 112, 114, 116,117) des demodulierten Signals.

**22.** Vorrichtung nach Anspruch 21,
dadurch gekennzeichnet, daß sie über Dekodiermittel verfügt, die folgendes umfassen:

- Mittel zum Wiedergewinnen (133) der Vielzahl von Trägerfrequenzen, durch Hochpaßfilterung des demodulierten Signals;
- Mittel zur analog/digital Umwandlung (131) des von der Vielzahl von Trägerfrequenzen gebildeten Signals;
- Mittel zum Demodulieren (137) einer jeden Trägerfrequenz, um die Datenelemente wieder zu gewinnen, die das digitale Quellsignal bilden.

**23.** Verwendung eines digitalen Datensignals nach einem der Ansprüche 1 bis 10 zum Senden digitaler Signale über ein verkabeltes Netz.

## Fig. 1

Codage convolutif — Entrelac. temporel — Entrelac. fréquentiel — Répartition dans l'espace F-T — F.F.T.⁻¹ — Emission — x(t)

Décodage de Viterbi — Désentrelac. — Démodulation — F.F.T. — Réception — y(t)

## Fig. 2

Fig. 3

Fig. 4

C(t)

C₂

C₁

51

C₀

Ts    2Ts    3Ts    4Ts

t

Fig. 5

Tuner   Filtre F.I.   Z(t)                    66    V(t)

61      62                                    ≈

                        fp                     yₒ(t)    67

64                              65

Récupération de porteuses    63

Fig. 6

Tuner   Filtre F.I.   Z(t)                 73       V(t)

71      72                                 ≈

                        79   Π/2   yₒ(t)    74

                                  OCT

                                           78

                        ≈                  75

Comparateur de phase

Fig. 7

Fig. 8

$f_p-7,25$MHz        $f_p+0,75$MHz

$f_p=38,9$MHz

$\{I(nT)\}$    $(-1)^n$    96    94

91    Retard    MUX    $x(n.T/2)$

97    98    99

CNA    $x(t)$

$1/T$

$\{Q(nT)\}$    Synthèse des $Q(nT+T/2)$    93

92    $(-1)^{n+1}$

Fig. 9

$Q(nT)$    101

103    102    $\frac{1}{2T}$    $\frac{1}{T}$    103    102    $\frac{2}{T}$

Fig. 10

$a_0=1$

$a_{-1}$    $a_1$

$a_{-4}$   $a_{-2}$    $a_2$   $a_4$

$a_{-3}$    T    $a_3$   $a_5$

Fig. 11

```
┌─────────────────────────────────────┐
│    Création du signal COFDM         │─────── 121
└─────────────────────────────────────┘
                 │
                 │ ~122
                 ▼
┌─────────────────────────────────────┐
│    Ajout de la fréquence pilote     │─────── 123
└─────────────────────────────────────┘
                 │
                 ▼
```

## Fig. 12

## Fig. 13